(19) **Europäisches Patentamt**
**European Patent Office**
**Office européen des brevets**

(11)     **EP 3 802 689 B1**

(12)                **EUROPEAN PATENT SPECIFICATION**

(45) Date of publication and mention
of the grant of the patent:
**27.04.2022 Bulletin 2022/17**

(21) Application number: **19724208.4**

(22) Date of filing: **17.05.2019**

(51) International Patent Classification (IPC):
***C08L 23/10*** (2006.01)     ***C08L 23/04*** (2006.01)
***C08L 23/08*** (2006.01)     ***C08L 23/12*** (2006.01)
***C08K 3/34*** (2006.01)

(52) Cooperative Patent Classification (CPC):
(C-Sets available)
**C08L 23/10;** C08L 2205/03; C08L 2205/035;
C08L 2207/02; C08L 2207/20          (Cont.)

(86) International application number:
**PCT/EP2019/062870**

(87) International publication number:
**WO 2019/224129 (28.11.2019 Gazette 2019/48)**

(54) **PROCESS TO PRODUCE POLYPROPYLENE-BASED COMPOSITION FROM POST-CONSUMER RESINS AND ARTICLES MADE OF SAID COMPOSITIONS**

VERFAHREN ZUR HERSTELLUNG VON POLYPROPYLENBASIERTER ZUSAMMENSETZUNG AUS RECYCELTEM HARZ UND AUS DEN ZUSAMMENSETZUNGEN HERGESTELLTE ARTIKEL

PROCÉDÉ POUR PRODUIRE UNE COMPOSITION À BASE DE POLYPROPYLÈNE À PARTIR DE RÉSINES POST-CONSOMMATION ET ARTICLES FABRIQUÉS À PARTIR DESDITES COMPOSITIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.05.2018 EP 18174065**

(43) Date of publication of application:
**14.04.2021 Bulletin 2021/15**

(73) Proprietor: **TotalEnergies One Tech Belgium**
**7181 Seneffe (BE)**

(72) Inventors:
• **DURANEL, Laurent**
**29750 LOCTUDY (FR)**
• **CHARLIER, Pascal**
**1140 Evere (BE)**

• **COLONVAL, Freddy**
**6120 NALINNES (BE)**

(74) Representative: **Raboin, Jean-Christophe**
**Total Research & Technology Feluy**
**Zone Industrielle C**
**7181 Seneffe (BE)**

(56) References cited:
**EP-A1- 3 165 473          WO-A1-2015/169690**
**US-A1- 2011 105 667**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/10**

C-Sets
**C08L 23/10**

**Description**

**FIELD OF THE INVENTION**

The invention relates to a process for recycling polypropylene from domestic polymer waste to obtain a polypropylene blend having good mechanical properties.

**BACKGROUND OF THE INVENTION**

The circular economy concept aims to recycle more polymers from post-consumer resins (PCR). The post-consumer resins of polypropylene type are mainly coming from domestic or household waste. The volume of polypropylene originated from post-consumer waste is increasing. Brand-owners and converters are fostering to use more and more recycled material in their marketed articles to answer to final customers' demands to lower carbon footprint impact and energy consumption.

A final product wherein the recycled polypropylene content is too low does not bring high market interest. The threshold where recycled polypropylene content starts to be significant is deemed to be equal or above 50 wt%.

The existing post-consumer resin streams comprise a mix of polypropylene homopolymer (PPH), polypropylene random copolymer (PPR), polypropylene heterophasic copolymer (PPC) and minor content of high-density polyethylene (HDPE). The content of HDPE is usually below 15 wt%. The average mechanical properties of the PCR are similar to a homo-polypropylene with a melt flow index (MI2) ranging between 8 and 15 g/10 min; a flexural modulus ranging between 1000 and 1100 MPa, and a low impact strength such as Charpy notched of about 5 kJ/m$^2$ at 23 °C.

These properties do not allow such PCR to be suitable for extrusion or injection applications like pipes or corrugated pipes extrusion, sheets or corrugated sheets extrusion, injection moulding of technical parts, boxes, caps, pallets, blow moulded articles, foams etc. for which high mechanical properties at low temperatures are required.

As a consequence, for applications requiring low MI2 polypropylene, virgin resins are preferably used, or blends of virgin resins with post-production scraps, or from closed loop concept, wherein articles are specifically collected to avoid mixing with other polymers and are recycled for same or similar applications. There is no available solution to use general post-consumer resins of polypropylene because these streams possess neither a suitable MI2 value nor the mechanical properties to fulfil the requirements for those applications.

It is noted that WO2015/169690 describes compositions comprising from 70 to 90 wt% of recycled material and from 10 to 25 wt% of a compatibilizer being a heterophasic propylene copolymer. The recycled material comprises from 30 to 70 wt% of polypropylene and from 70 to 30 wt% of polyethylene. However, as shown in the examples of this document, the recycled material is selected to have an MI2 of at most 6 g/10 min and a Charpy impact strength at 23 °C (notched) below 10 kJ/m$^2$. Therefore, this document does not provide a solution regarding the possible use of general post-consumer resins of polypropylene having higher MI2 to produce a composition having improved balance between stiffness and impact properties. Moreover, it is desirable to further enhance the impact properties of the composition obtained.

Thus, an objective of the invention is to provide a process for the production of a polypropylene-based material comprising a high content of general post-consumer resin and having at the same time good balance between stiffness and impact properties, with preference including good impact properties at low temperatures (-20 °C).

It is also an object of the invention to provide a process for the production of a polypropylene-based material comprising a high content of general post-consumer resins and having a good balance between stiffness and impact properties (with preference including good impact properties at low temperatures) and being suitable for applications requiring low MI2 such as a MI2 of less than 8 g/10 min, preferably such as a MI2 of less than 5 g/10 min.

It is a further object of the invention to provide a process for the production of a polypropylene-based material comprising a high content of post-consumer resins, having a good balance between stiffness and impact properties, with preference including good impact properties at low temperatures, wherein the process is cost effective.

It is also an object of the invention to provide such a polypropylene-based material.

**SUMMARY OF THE INVENTION**

The inventors have surprisingly found that the above objectives can be attained either individually or in any combination, by the use of a combination of a specific virgin impact propylene copolymer material and of a polyethylene resin, in a blend comprising at least 35 wt% of PCR, and preferably at least 50 wt% of PCR. The added polymers boost the stiffness and the impact properties of the composition to the desired balance. Moreover, the composition shows the desired MI2 value suitable for its use in injection or extrusion applications.

According to a first aspect, the invention provides a process to produce a polypropylene-based composition comprising post-consumer resin (PCR), the process comprising the steps of:

- providing a component A being a polypropylene post-consumer resin (PCR-PP) having an MI2 ranging from 7 to 70 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A;
- providing a component B being a polypropylene resin having an MI2 ranging from 0.1 to 10.0 g/10 min as determined according to ISO 1133 conditions M, at a temperature of 230 °C and under a load of 2.16 kg; and
- melt-blending the components to form a polypropylene-based composition wherein the content of component A in the polypropylene-based composition is ranging from 35 to 80 wt% as based on the total weight of the polypropylene-based composition.

With preference, the invention provides a process to produce a polypropylene-based composition comprising post-consumer resin (PCR), the process comprising the steps of:

- providing a component A being a polypropylene post-consumer resin (PCR-PP) having an MI2 ranging from 7 to 20 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A;
- providing a component B being a polypropylene resin having an MI2 ranging from 0.1 to 5.0 g/10 min as determined according to ISO 1133 conditions M, at a temperature of 230 °C and under a load of 2.16 kg; and
- melt-blending the components to form a polypropylene-based composition wherein the content of component A in the polypropylene-based composition is ranging from 35 to 80 wt% as based on the total weight of the polypropylene-based composition.

In a preferred embodiment, before the step of melt-blending the components to form a polypropylene-based composition, the process further comprises one or more steps selected from:

- providing a component C being a polyethylene resin having an MI2 ranging from 0.1 to 5.0 g/10 min as determined according to ISO 1133 conditions D, at a temperature of 190 °C and under a load of 2.16 kg;
- providing a component D being one or more elastomers; and
- providing a component E being one or more fillers.

In particular, in a preferred embodiment, the invention provides a process to produce a polypropylene-based composition comprising post-consumer resin (PCR) characterised in that it comprises the steps of:

- providing a component A being a polypropylene post-consumer resin (PCR-PP) having an MI2 ranging from 7 to 70 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A;
- providing a component B being a polypropylene resin having an MI2 ranging from 0.1 to 10.0 g/10 min as determined according to ISO 1133 conditions M, at a temperature of 230 °C and under a load of 2.16 kg;
- providing a component C being a polyethylene resin having an MI2 ranging from 0.1 to 5.0 g/10 min as determined according to ISO 1133 conditions D, at a temperature of 190 °C and under a load of 2.16 kg; and
- melt-blending the components to form a polypropylene-based composition wherein the content of component A in the polypropylene-based composition is ranging from 35 to 80 wt% as based on the total weight of the polypropylene-based composition.

In a preferred embodiment, the invention provides a process to produce a polypropylene-based composition comprising post-consumer resin (PCR) characterised in that it comprises the steps of:

- providing a component A being a polypropylene post-consumer resin (PCR-PP) having an MI2 ranging from 7 to 70 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A;
- providing a component B being a polypropylene resin having an MI2 ranging from 0.1 to 10.0 g/10 min as determined according to ISO 1133 conditions M, at a temperature of 230 °C and under a load of 2.16 kg;
- providing a component D being one or more elastomers ; and
- melt-blending the components to form a polypropylene-based composition wherein the content of component A in the polypropylene-based composition is ranging from 35 to 80 wt% as based on the total weight of the polypropylene-based composition.

In a preferred embodiment, the invention provides a process to produce a polypropylene-based composition comprising post-consumer resin (PCR) characterised in that it comprises the steps of:

- providing a component A being a polypropylene post-consumer resin (PCR-PP) having an MI2 ranging from 7 to 70 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A;
- providing a component B being a polypropylene resin having an MI2 ranging from 0.1 to 10.0 g/10 min as determined according to ISO 1133 conditions M, at a temperature of 230 °C and under a load of 2.16 kg;
- providing a component E being one or more fillers; and
- melt-blending the components to form a polypropylene-based composition wherein the content of component A in the polypropylene-based composition is ranging from 35 to 80 wt% as based on the total weight of the polypropylene-based composition.

In a preferred embodiment, the invention provides a process to produce a polypropylene-based composition comprising post-consumer resin (PCR) characterised in that it comprises the steps of:

- providing a component A being a polypropylene post-consumer resin (PCR-PP) having an MI2 ranging from 7 to 70 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A;
- providing a component B being a polypropylene resin having an MI2 ranging from 0.1 to 10.0 g/10 min as determined according to ISO 1133 conditions M, at a temperature of 230 °C and under a load of 2.16 kg;
- providing a component C being a polyethylene resin having an MI2 ranging from 0.1 to 5.0 g/10 min as determined according to ISO 1133 conditions D, at a temperature of 190 °C and under a load of 2.16 kg;
- providing a component D being one or more elastomers; and
- melt-blending the components to form a polypropylene-based composition wherein the content of component A in the polypropylene-based composition is ranging from 35 to 80 wt% as based on the total weight of the polypropylene-based composition.

In a preferred embodiment, the invention provides a process to produce a polypropylene-based composition comprising post-consumer resin (PCR) characterised in that it comprises the steps of:

- providing a component A being a polypropylene post-consumer resin (PCR-PP) having an MI2 ranging from 7 to 70 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A;
- providing a component B being a polypropylene resin having an MI2 ranging from 0.1 to 10.0 g/10 min as determined according to ISO 1133 conditions M, at a temperature of 230 °C and under a load of 2.16 kg;
- providing a component D being one or more elastomers;
- providing a component E being one or more fillers; and
- melt-blending the components to form a polypropylene-based composition wherein the content of component A in the polypropylene-based composition is ranging from 35 to 80 wt% as based on the total weight of the polypropylene-based composition.

In a preferred embodiment, the invention provides a process to produce a polypropylene-based composition comprising post-consumer resin (PCR) characterised in that it comprises the steps of:

- providing a component A being a polypropylene post-consumer resin (PCR-PP) having an MI2 ranging from 7 to 70 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A;
- providing a component B being a polypropylene resin having an MI2 ranging from 0.1 to 10.0 g/10 min as determined according to ISO 1133 conditions M, at a temperature of 230 °C and under a load of 2.16 kg;
- providing a component C being a polyethylene resin having an MI2 ranging from 0.1 to 5.0 g/10 min as determined according to ISO 1133 conditions D, at a temperature of 190 °C and under a load of 2.16 kg;

- providing a component E being one or more fillers; and
- melt-blending the components to form a polypropylene-based composition wherein the content of component A in the polypropylene-based composition is ranging from 35 to 80 wt% as based on the total weight of the polypropylene-based composition.

In a preferred embodiment, the invention provides a process to produce a polypropylene-based composition comprising post-consumer resin (PCR) characterised in that it comprises the steps of:

- providing a component A being a polypropylene post-consumer resin (PCR-PP) having an MI2 ranging from 7 to 70 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A;
- providing a component B being a polypropylene resin having an MI2 ranging from 0.1 to 10.0 g/10 min as determined according to ISO 1133 conditions M, at a temperature of 230 °C and under a load of 2.16 kg;
- providing a component C being a polyethylene resin having an MI2 ranging from 0.1 to 5.0 g/10 min as determined according to ISO 1133 conditions D, at a temperature of 190 °C and under a load of 2.16 kg;
- providing a component D being one or more elastomers;
- providing a component E being one or more fillers; and
- melt-blending the components to form a polypropylene-based composition wherein the content of component A in the polypropylene-based composition is ranging from 35 to 80 wt% as based on the total weight of the polypropylene-based composition.

With preference, one or more of the following embodiments can be used to better define the post-consumer resin (component A) to be used in the inventive process:

- The component A is a blend of recycled polypropylene and recycled polyethylene, wherein the content of recycled polyethylene is ranging from 1 to 27 wt% relative to the total weight of component A, preferably from 2 to 25 wt%, more preferably from 3 to 20 wt%, even more preferably from 4 to 18 wt% and most preferably from 5 to 15 wt%.
- Component A has an MI2 as determined according to ISO 1133 conditions M, at a temperature of 230 °C and under a load of 2.16 kg of at least 8 g/10 min; and/or of at most 60 g/10 min, preferably of at most 50 g/10 min, preferably of at most 40 g/10 min, preferably of at most 30 g/10 min, preferably of at most 25 g/10 min, preferably of at most 20 g/10 min, preferably of at most 19 g/10 min, preferably of at most 18 g/10 min, more preferably of at most 17 g/10 min and even more preferably of at most 16 g/10 min, most preferably of at most 15 g/10 min, and even most preferably of at most 14 g/10 min or at most 12 g/10 min.

With preference, one or more of the following embodiments can be used to better define the polypropylene resin (component B) to be used in the inventive process:

- The component B has an MI2, as determined according to ISO 1133 conditions M, at a temperature of 230 °C and under a load of 2.16 kg, of at least 0.2 g/10 min preferably of at least 0.3 g/10 min; and/or of at most 9.0 g/10 min, preferably of at most 8.0 g/10 min, preferably of at most 7.0 g/10 min, preferably of at most 6.0 g/10 min, preferably of at most 5.0 g/10 min, preferably of at most 4.5 g/10 min, preferably of at most 4.0 g/10 min, more preferably of at most 3.5 g/10 min, even more preferably of at most 3.0 g/10 min, most preferably of at most 2.5 g/10 min, even most preferably of at most 2.0 g/10 min, or 1.5 g/10 min, or less than 1.0 g/10 min, preferably of at most 0.9 g/10 min, more preferably of at most 0.8 g/10 min and even more preferably of at most 0.5 g/10 min.
- The component B is selected from a polypropylene homopolymer resin, a random propylene copolymer resin, a heterophasic propylene copolymer resin, and any mixture thereof; with preference, the component B is a heterophasic propylene copolymer resin.
- The content of component B is ranging from 10 wt% to 60 wt% as based on the total weight of the polypropylene-based composition, preferably from 11 wt% to 55 wt%, more preferably from 12 wt% to 50 wt%, even more preferably from 13 wt% to 48 wt% and most preferably from 15 wt% to 45 wt%.

With preference, one or more of the following embodiments can be used to better define the polyethylene resin (component C) to be used in the inventive process:

- Component C is one or more selected from:

    C1) a virgin polyethylene resin (PE); and/or

C2) a polyethylene post-consumer resin (PCR-PE); and/or

C3) a polyolefin post-consumer resin (PCR-PO) comprising at least 30 wt% of polyethylene based on the total weight of the polyolefin post-consumer resin, with preference, the component C comprises a polyethylene post-consumer resin (PCR-PE) and/or a polyolefin post-consumer resin (PCR-PO), so that the total content post-consumer resin (PCR$_T$) in the polypropylene-based composition is ranging from 50 to 80 wt% as based on the total weight of the polypropylene-based composition, wherein the total content post-consumer resin (PCR$_T$) in the polypropylene-based composition is the sum of the content of component A (PCR-PP) and of the recycled material in component C selected from polyethylene post-consumer resin (PCR-PE) and/or polyolefin post-consumer resin (PCR-PO).

- The component C has a density of at least 0.940 g/cm$^3$ as determined according to ISO 1183 at 23 °C, preferably of at least 0.945 g/cm$^3$, more preferably of at least 0.950 g/cm$^3$, and even more preferably of at least 0.955 g/cm$^3$.
- The component C has an MI2 ranging from 0.1 to 5.0 g/10 min as determined according to ISO 1133 conditions D, at a temperature of 190 °C and under a load of 2.16 kg, preferably ranging from 0.2 to 2.5 g/10 min, more preferably from 0.3 to 2.0 g/10 min, even more preferably from 0.4 to 1.5 g/10 min, and most preferably 0.5 to 1.0 g/10 min.
- The content of component C provided is ranging from 5 wt% to 25 wt% as based on the total weight of the polypropylene-based composition, preferably ranging from 7 wt% to 24 wt%, more preferably from 8 wt% to 23 wt%, even more preferably from 9 wt% to 22 wt%, and most preferably from 10 wt% to 20 wt%.
- The component C comprises a polyolefin post-consumer resin (PCR-PO) comprising at least 40 wt% of polyethylene based on the total weight of the polyolefin post-consumer resin, preferably at least 50 wt%, more preferably at least 60 wt% and most preferably at least 70 wt%.
- The component C is a polyolefin post-consumer resin (PCR-PO) comprising at least 40 wt% of polyethylene based on the total weight of the polyolefin post-consumer resin, preferably at least 50 wt%, more preferably at least 60 wt% and most preferably at least 70 wt%.

With preference, one or more of the following embodiments can be used to better define the process and the one or more elastomers (component D) to be used in the inventive process:

- The process further comprises a step of providing a component D being one or more elastomers, and the step of melt-blending the components to form a polypropylene-based composition comprises melt-blending the component D with the other components to form the polypropylene-based composition.
- The component D, being one or more elastomers, is selected from elastomeric copolymers of ethylene with 1-octene, elastomeric copolymers of ethylene with 1-butene, elastomeric copolymers of ethylene with propene, and any mixture thereof; and/or from SIS (Styrene isoprene styrene block copolymers), SEPS (Hydrogenated Styrene isoprene styrene block copolymers), SBS (Styrene butadiene styrene block copolymers), SEBS (Hydrogenated styrenic butadiene copolymers), SBSS (Styrene butadiene styrene styrene block copolymers), and any mixture thereof.
- The component D, being one or more elastomers, has an MI2 ranging from 0.5 to 5.0 g/10 min as determined according to ISO 1133 conditions D, at a temperature of 190 °C and under a load of 2.16 kg, preferably the component D has an MI2 of at most 4.5 g/10 min, more preferably of at most 4.0 g/10 min, even more preferably of at most 3.5 g/10 min, most preferably of at most 3.0 g/10 min, even most preferably of at most 2.5 g/10 min or of at most 2.0 g/10 min.

With preference, one or more of the following embodiments can be used to better define the process and the one or more fillers (component E) to be used in the inventive process:

- The process further comprises the step of providing a component E being one or more fillers, and the step of melt-blending the components to form a polypropylene-based composition comprises melt-blending the component E with the other components to form the polypropylene-based composition.
- Component E is selected from talc mineral filler, wollastonite, calcium carbonate, glass fibres, bamboo fibres, flax fibres, hemp fibres, and any mixture thereof.
- Component E is one or more talc mineral fillers.
- The component E comprises one or more talc mineral fillers, with preference component E is one or more talc mineral fillers.
- The one or more talc mineral fillers of component E have a median particle size (d50) of less than 50 μm as determined according to ISO 13317-3 by Sedigraph, preferably less than 20 μm, more preferably less than 15 μm and most preferably at most 10 μm and/or a median particle size (d50) of at least 0.1 μm as determined according to ISO 13317-3 by Sedigraph, preferably at least 1.0 μm, more preferably at least 1.5 μm, even more preferably of at least 1.8 $\mu$m, most preferably of at least 2.0, and even most preferably of at least 2.1 $\mu$m.

With preference, one or more of the following embodiments can be used to better define the process:

- the process further comprises the step of providing a component D being one or more elastomers, and the step of providing a component E being one or more fillers; and in that the step of melt-blending the components to form a polypropylene-based composition comprises melt-blending the component D and the component E with the other components to form the polypropylene-based composition; with preference the polypropylene-based composition comprises from 0.1 to 10 wt% of component D as based on the total weight of the polypropylene-based composition, wherein component D is one or more elastomers and/or the polypropylene-based composition comprises from 0.1 to 15 wt% of component E as based on the total weight of the polypropylene-based composition.
- the process further comprises the step of providing a component D being one or more elastomers, and the step of providing a component E being one or more fillers; and in that the step of melt-blending the components to form a polypropylene-based composition comprises melt-blending the component D and the component E with the other components to form the polypropylene-based composition; wherein the polypropylene-based composition comprises from 0.1 to 10 wt% of component D as based on the total weight of the polypropylene-based composition, wherein component D is one or more elastomers and from 0.1 to 15 wt% of component E as based on the total weight of the polypropylene-based composition.

With preference, one or more of the following embodiments can be used to better define the polypropylene-based composition obtained by the inventive process.

As regard the content of polyethylene in the composition:

The polypropylene-based composition comprises a total polyethylene content ranging from 5 to 25 wt% as based on the total weight of the polypropylene-based composition, wherein the total polyethylene content in the polypropylene-based composition is defined by the sum of the polyethylene content in component A and in component C; preferably ranging from 6 wt% to 24 wt%, more preferably ranging from 7 wt% to 22 wt%, even more preferably ranging from 8 wt% to 20 wt%, most preferably ranging from 9 wt% to 18 wt%, even most preferably ranging from 10 wt% to 16 wt%, or from 10 wt% to 15 wt%. In a preferred embodiment, the total polyethylene content in the polypropylene-based composition is defined by the sum of the polyethylene content in component A and in component C and is ranging from 5 to 15 wt% as based on the total weight of the polypropylene-based composition. A low content of polyethylene is favourable to the achievement of a high flexural modulus.

As regard the total content of post-consumer resin in the composition:

- The component C comprises a polyethylene post-consumer resin (PCR-PE) and/or a polyolefin post-consumer resin (PCR-PO), so that the total content post-consumer resin ($PCR_T$) in the polypropylene-based composition is ranging from 40 to 80 wt% as based on the total weight of the polypropylene-based composition, preferably from 50 to 80 wt%, wherein the total content post-consumer resin ($PCR_T$) in the polypropylene-based composition is the sum of the content of component A (PCR-PP) and of the post-consumer resin in component C. The total content post-consumer resin (wt% $PCR_T$) in the polypropylene-based composition is defined by the equation (1)

$$\text{wt\% } PCR_T = \text{wt\% } PCR\text{-}PP + \text{wt\% } PCR\text{-}PE + \text{wt\% } PCR\text{-}PO \quad (1)$$

- The component C is selected from a polyethylene post-consumer resin (PCR-PE) and/or a polyolefin post-consumer resin (PCR-PO), so that the total content post-consumer resin ($PCR_T$) in the polypropylene-based composition is at least 42 wt% as based on the total weight of the polypropylene-based composition, preferably at least 45 wt%, more preferably at least 47 wt%, even more preferably at least 50 wt% and most preferably at least 52 wt%.

As regard the content of elastomer in the composition:

The polypropylene-based composition comprises from 0 to 10.0 wt% of component D (i.e. one or more elastomers), as based on the total weight of the polypropylene-based composition, preferably from 0.1 to 10.0 wt%, more preferably from 0.2 wt% to 9.8 wt%, even more preferably from 0.5 wt% to 9.5 wt%, most preferably from 1.0 wt% to 9.3 wt%, even most preferably from 1.5 wt% to 9.1 wt%, or from 2.5 wt% to 9.0 wt%, or from 5.0 wt% to 8.5 wt%.

As regard the content of the filler in the composition:

The polypropylene-based composition comprises from 0 to 20.0 wt% of component E (with preference being one or more talc mineral fillers), as based on the total weight of the polypropylene-based composition, preferably from 0.1 to 15.0 wt%, more preferably from 0.2 wt% to 14.0 wt%, even more preferably from 0.5 wt% to 13.0 wt%, most preferably from 1.0 wt% to 12 wt%, even most preferably from 1.5 wt% to 11.0 wt%, or from 2.5 wt% to 10.5 wt%, or from 5.0 wt% to 10 wt%. In a preferred embodiment, the polypropylene-based composition comprises from 0 to 10.0 wt% of component E (with preference being one or more talc mineral fillers), as based on the total weight of the polypropylene-based composition.

As regard the properties of the composition:

- The polypropylene-based composition has an MI2 ranging from 1.0 to 8.0 g/10 min as determined according to ISO 1133 conditions M, at a temperature of 230 °C and under a load of 2.16 kg, preferably ranging from 1.1 to 7.0 g/10 min, more preferably from 1.2 to 6.0 g/10 min, even more preferably from 1.3 to 5.0 g/10 min, most preferably from 1.4 to 4.5 g/10 min, even most preferably from 1.5 to 4.0 g/10 min, or from 1.5 to 3.5 g/10 min or from 1.5 to 3.0 g/10 min.
- The polypropylene-based composition has an acetone insolubles content ranging from 1.0 to 20 wt% as based on the total weight of the polypropylene-based composition, preferably from 1.5 to 15 wt%, more preferably from 2 to 18 wt%, and most preferably from 2 to 15 wt%. With preference, the polypropylene-based composition has an acetone insolubles content ranging from 1.0 to 15 wt% as based on the total weight of the polypropylene-based composition.
- The polypropylene-based composition has a flexural modulus of at least 950 MPa as determined according to ISO 178, preferably of at least 1000 MPa, more preferably of at least 1050 MPa, and even more preferably of at least 1100 MPa.
- The polypropylene-based composition has an Izod impact strength (notched) at 23 °C of at least 7 kJ/m$^2$ as determined according to ISO 180, preferably of at least 20 kJ/m$^2$, and more preferably of at least 50 kJ/m$^2$.
- The polypropylene-based composition has an Izod impact strength (notched) at -20 °C of at least 3.0 kJ/m$^2$ as determined according to ISO 180, preferably of at least 3.5 kJ/m$^2$, and even more preferably of at least 4.0 kJ/m$^2$.

According to a second aspect, the invention provides a polypropylene-based composition comprising a post-consumer resin (PCR) produced by a process according to the first aspect.

According to a third aspect, the invention provides a polypropylene-based composition comprising from 35 to 80 wt% of a component A being a polypropylene post-consumer resin (PCR-PP) as based on total weight of the polypropylene-based composition, the component A being a polypropylene post-consumer resin having an MI2 ranging from 7 to 70 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A; and the polypropylene-based composition having:

- an MI2 ranging from 1.0 to 8.0 g/10 min as determined according to ISO 1133 conditions M, at a temperature of 230 °C and under a load of 2.16 kg;
- an acetone insolubles content ranging from 1 to 15 wt% as based on the total weight of the polypropylene-based composition; and
- a total polyethylene content ranging from 5 to 25 wt%, as based on the total weight of the polypropylene-based composition, preferably ranging from 5 to 15 wt%;

with preference, the polypropylene-based composition is produced by a process according to the first aspect; and/or the component A being a polypropylene post-consumer resin having an MI2 ranging from 7 to 20 g/10 min as determined according to ISO 1133 conditions M, at a temperature of 230 °C and under a load of 2.16 kg. In an embodiment, the polypropylene-based composition has an MI2 ranging from 1.0 to 25.0 g/10 min as determined according to ISO 1133 conditions M, at a temperature of 230 °C and under a load of 2.16 kg.

According to a fourth aspect, the invention provides the use of a polypropylene-based composition comprising a post-consumer resin (PCR) according to the second aspect or to the third aspect, to make an article in a process selected from extrusion, blow-moulding, injection, injection blow moulding, injection stretch blow moulding, rotomoulding, extrusion and thermoforming.

According to a fifth aspect, the invention provides an article produced from the polypropylene-based composition according to the second aspect or to the third aspect or produced from a blend comprising the polypropylene composition-based according to the second aspect or to the third aspect.

With preference, the article is selected from pipes, corrugated pipes, sheets, corrugated sheets, boxes, pails, bottles, jerrycans, containers, caps and closures, appliances, trays, luggage, automobile parts, bumpers, dashboards, battery cases, and interior trim panels.

In an embodiment, the invention provides a foamed article produced from a blend comprising the polypropylene composition-based according to the second aspect or to the third aspect, with one or more foam expansion agents.

According to a sixth aspect, the invention provides the use of a polypropylene resin in a process to produce a polypropylene-based composition comprising a polypropylene post-consumer resin (PCR), wherein the use comprises:

- providing a component A being a polypropylene post-consumer resin (PCR-PP) having an MI2 ranging from 7 to 70 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A; and
- providing a component B being a polypropylene resin having an MI2 ranging from 0.1 to 10.0 g/10 min as determined according to ISO 1133 conditions M, at a temperature of 230 °C and under a load of 2.16 kg;

to produce a polypropylene-based composition having an MI2 ranging from 1.0 to 8.0 g/10 min as determined according to ISO 1133 conditions M, at a temperature of 230 °C and under a load of 2.16 kg.

With preference, the use of a polypropylene resin in a process to produce a polypropylene-based composition comprising a polypropylene post-consumer resin (PCR), wherein the use comprises:

- providing a component A being a polypropylene post-consumer resin (PCR-PP) having an MI2 ranging from 7 to 20 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A; and
- providing a component B being a polypropylene resin having an MI2 ranging from 0.1 to 5.0 g/10 min as determined according to ISO 1133 conditions M, at a temperature of 230 °C and under a load of 2.16 kg;

to produce a polypropylene-based composition having an MI2 ranging from 1.0 to 8.0 g/10 min as determined according to ISO 1133 conditions M, at a temperature of 230 °C and under a load of 2.16 kg.

Preferably, the invention provides the use of a polypropylene resin in a process to produce a polypropylene-based composition comprising a polypropylene post-consumer resin (PCR), wherein the use comprises:

- providing a component A being a polypropylene post-consumer resin (PCR-PP) having an MI2 ranging from 7 to 70 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A;
- providing a component B being a polypropylene resin having an MI2 ranging from 0.1 to 10.0 g/10 min as determined according to ISO 1133 conditions M, at a temperature of 230 °C and under a load of 2.16 kg; and
- providing a component C being a polyethylene resin having an MI2 ranging from 0.1 to 5.0 g/10 min as determined according to ISO 1133 conditions D, at a temperature of 190 °C and under a load of 2.16 kg;

to produce a polypropylene-based composition having an MI2 ranging from 1.0 to 8.0 g/10 min as determined according to ISO 1133 conditions M, at a temperature of 230 °C and under a load of 2.16 kg.

With preference, component B is a heterophasic propylene copolymer resin having an MI2 ranging from 0.1 to 10.0 g/10 min as determined according to ISO 1133 conditions M, at a temperature of 230 °C and under a load of 2.16 kg; more preferably, having an MI2 ranging from 0.1 to 5.0 g/10 min.

In an embodiment, the invention provides the use of a polypropylene resin in a process to produce a polypropylene-based composition comprising a polypropylene post-consumer resin (PCR), wherein the process is according to the first aspect.

## DETAILED DESCRIPTION OF THE INVENTION

For the purpose of the invention, the following definitions are given.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g. 1 to 5 includes 1, 2, 3, 4 when referring to, for example, a number of elements, and can also include 1.5, 2, 2.75 and 3.80, when referring to, for example, measurements). The recitation of endpoints also includes the recited endpoint values themselves (e.g. from 1.0 to 5.0 includes both 1.0 and 5.0). Any numerical range recited herein is intended to include all sub-ranges subsumed therein.

The reference throughout this specification to "one embodiment" or "an embodiment" means that a particular feature, structure or characteristic described in connection with the embodiment is included in at least one embodiment of the present invention. The particular features, structures, characteristics or embodiments may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention and form different embodiments, as would be understood by those in the art.

Unless otherwise defined, all terms used in disclosing the invention, including technical and scientific terms, have the meaning as commonly understood by one skilled in the art to which this invention belongs. By means of further guidance, definitions for the terms used in the description are included to better appreciate the teaching of the present invention.

As used herein, the terms "melt blending" involves the use of shear force, extensional force, compressive force, ultrasonic energy, electromagnetic energy, thermal energy or combinations comprising at least one of the foregoing forces or forms of energy and is conducted in a processing equipment wherein the aforementioned forces are exerted by a single screw, multiple screws, intermeshing co-rotating or counter-rotating screws, non-intermeshing co-rotating or counter-rotating screws, reciprocating screws, screws with pins, barrels with pins, rolls, rams, helical rotors, or combinations comprising at least one of the foregoing. Melt blending may be conducted in machines such as, single or multiple screw extruders, Buss kneader, Eirich mixers, Henschel, helicones, Ross mixer, Banbury, roll mills, moulding machines such as injection moulding machines, vacuum forming machines, blow moulding machines, or the like, or combinations comprising at least one of the foregoing machines. It is generally desirable during melt or solution blending of the composition to impart a specific energy of about 0.01 to about 10 kilowatt-hours/kilogram (kW h/kg) of the composition. In a preferred embodiment, melt blending is performed in a twin-screw extruder, such as a Brabender co-rotating twin screw extruder.

The terms "polypropylene" (PP) and "propylene polymer" may be used synonymously. The term "polypropylene" encompasses homopolymer of propylene as well as copolymer of propylene which can be derived from propylene and one or more comonomers selected from the group consisting of ethylene and $C_4$-$C_{20}$ alpha-olefins, such as 1-butene, 1-pentene, 4-methyl-1-pentene, 1-hexene, 1-octene, 1-decene, 1-dodecene, 1-tetradecene, 1-hexadecene, 1-octadecene and 1-eicosene.

The terms "polyethylene" (PE) and "ethylene polymer" may be used synonymously. The term "polyethylene" encompasses homopolymer of ethylene as well as copolymer of ethylene which can be derived from ethylene and one or more comonomers selected from the group consisting of $C_3$-$C_{20}$ alpha-olefins, such as propylene, 1-butene, 1-pentene, 4-methyl-1-pentene, 1-hexene, 1-octene, 1-decene, 1-dodecene, 1-tetradecene, 1-hexadecene, 1-octadecene and 1-eicosene.

The terms "polypropylene resin" or "polyethylene resin", as used herein, refer to polypropylene or polyethylene fluff or powder that is extruded, and/or melted and/or pelletized and can be produced through compounding and homogenizing of the polypropylene resin or the polyethylene resin as taught herein, for instance, with mixing and/or extruder equipment. As used herein, the term "polypropylene" may be used as a shorthand for "polypropylene resin", idem for "polyethylene" that can be used as a shorthand for "polyethylene resin". The terms "fluff" or "powder" as used herein refer to polypropylene material with the hard catalyst particle at the core of each grain and is defined as the polymer material after it exits the polymerization reactor (or the final polymerization reactor in the case of multiple reactors connected in series).

Under normal production conditions in a production plant, it is expected that the melt index (MI2, HLMI, MI5) will be different for the fluff than for the polypropylene resin. Under normal production conditions in a production plant, it is expected that the density will be slightly different for the fluff, than for the polypropylene resin. Unless otherwise indicated, density and melt index for the polypropylene resin refer to the density and melt index as measured on the polypropylene resin as defined above.

The terms "virgin polypropylene" are used to denote a polypropylene directly obtained from a propylene polymerization plant. The terms "directly obtained" is meant to include that the polypropylene may optionally be passed through a pelletization step or an additivation step or both.

The terms "Post Consumer Resin", which may be abbreviated as "PCR", is used to denote the component of domestic waste, household waste or end of life vehicle waste.

The terms "polyolefin post-consumer resin" (PCR-PO) is a recycled material that is a compound made of high-density polyethylene, low-density polyethylene, linear low-density polyethylene and polypropylene. The content of polypropylene is higher than in polyethylene post-consumer resin.

Ziegler-Natta catalyst systems are generally formed from the combination of a metal component (i.e. a catalyst precursor) with one or more additional components, such as a catalyst support, a co-catalyst and/or one or more electron donors.

Metallocene catalysts are compounds of Group IV transition metals of the Periodic Table such as titanium, zirconium, hafnium, etc., and have a coordinated structure with a metal compound and a ligand composed of one or two groups of cyclopentadienyl, indenyl, fluorenyl or their derivatives.

As used herein, "blend", "polymer blend" and like terms refer to a composition of two or more compounds, for example, two or more polymers or one polymer with at least one other compound.

The particular features, structures, characteristics or embodiments may be combined in any suitable manner, as would be apparent to a person skilled in the art from this disclosure, in one or more embodiments.

The invention provides a process to produce a polypropylene-based composition comprising post-consumer resin (PCR) comprising the steps of:

- providing a component A being a polypropylene post-consumer resin (PCR-PP) having an MI2 ranging from 7 to 70 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A;
- providing a component B being a polypropylene resin having an MI2 ranging from 0.1 to 10.0 g/10 min as determined according to ISO 1133 conditions M, at a temperature of 230 °C and under a load of 2.16 kg;
- optionally providing a component C being a polyethylene resin having an MI2 ranging from 0.1 to 5.0 g/10 min as determined according to ISO 1133 conditions D, at a temperature of 190 °C and under a load of 2.16 kg;
- optionally providing a component D being one or more elastomers;
- optionally providing a component E being one or more fillers; and
- melt-blending the components to form a polypropylene-based composition wherein the content of component A in the polypropylene-based composition is ranging from 35 to 80 wt% as based on the total weight of the polypropylene-based composition.

With preference, the process to produce a polypropylene-based composition comprising post-consumer resin (PCR) comprising the steps of:

- providing a component A being a polypropylene post-consumer resin (PCR-PP) having an MI2 ranging from 7 to 20 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A;
- providing a component B being a polypropylene resin having an MI2 ranging from 0.1 to 5.0 g/10 min as determined according to ISO 1133 conditions M, at a temperature of 230 °C and under a load of 2.16 kg;
- optionally providing a component C being a polyethylene resin having an MI2 ranging from 0.1 to 5.0 g/10 min as determined according to ISO 1133 conditions D, at a temperature of 190 °C and under a load of 2.16 kg;
- optionally providing a component D being one or more elastomers;
- optionally providing a component E being one or more fillers; and
- melt-blending the components to form a polypropylene-based composition wherein the content of component A in the polypropylene-based composition is ranging from 35 to 80 wt% as based on the total weight of the polypropylene-based composition.

With preference, the component B is a heterophasic propylene copolymer resin having an MI2 ranging from 0.1 to 10.0 g/10 min as determined according to ISO 1133 conditions M, at a temperature of 230 °C and under a load of 2.16 kg, more preferably an MI2 ranging from 0.1 to 5.0 g/10 min.

It has been found that, surprisingly, it is possible to produce a polypropylene-based composition comprising a good balance of stiffness and impact properties by melt blending a polypropylene resin of low melt index of at most 10.0 g/10 min, preferably at most 5.0 g/10 min, to a polypropylene post-consumer resin having a melt index of at least 7.0 g/10 min. In particular, and as demonstrated in the example, a synergy has been found between the components to improve the flexural modulus as determined according to ISO 178, so that the measured flexural modulus of the composition is higher than the flexural modulus that was expected in theory (as determined by calculation).

The resulting polypropylene-based composition may comprise a high content of PCR, and at the same time can be used to manufacture articles in processes selected from extrusion, blow-moulding, injection, rotomoulding or injection blow moulding. Indeed, as it is demonstrated in the examples, it is possible to obtain a polypropylene-based composition with an MI2 of at most 5.0 g/10 min, and that shows a flexural modulus of at least 950 MPa, an IZOD 23 °C of at least 7 kJ/m$^2$ and an IZOD -20 °C of at least 4 kJ/m$^2$.

An improved balance is found when the composition comprises a component C being a polyethylene resin having an MI2 ranging from 0.1 to 5.0 g/10 min as determined according to ISO 1133 conditions D, at a temperature of 190 °C and under a load of 2.16 kg.

<u>Selection of the polypropylene post-consumer resin (component A)</u>

The polypropylene post-consumer resin (PCR-PP) is preferably originated from a specific collection of domestic or household waste, and/or from end of life vehicles (ELV) waste. With preference, the polypropylene post-consumer resin (PCR-PP) is devoid of industrial waste. However, any polypropylene post-consumer resin fulfilling the requirements of the invention may be used. An example of a commercially available polypropylene post-consumer resin (PCR-PP) that can be used in the process according to the invention is PP Regranulat 500-S marketed by Vogt Plastic GmbH.

For the process of the invention, the polypropylene post-consumer resin (PCR-PP) is selected to have an MI2 ranging from 7 to 20 g/10 min as determined according to ISO 1133 conditions M, at a temperature of 230 °C and under a load of 2.16 kg.

With preference, component A has an MI2 of at least 8 g/10 min as determined according to ISO 1133 conditions M, at a temperature of 230 °C and under a load of 2.16 kg.

Preferably, the component A has an MI2 of at most 60 g/10 min as determined according to ISO 1133 conditions M, at a temperature of 230 °C and under a load of 2.16 kg, preferably of at most 50 g/10 min, preferably of at most 40 g/10 min, preferably of at most 30 g/10 min, preferably of at most 25 g/10 min, preferably of at most 20 g/10 min, preferably of at most 19 g/10 min, preferably of at most 18 g/10 min, more preferably of at most 17 g/10 min and even more preferably of at most 16 g/10 min, most preferably of at most 15 g/10 min, and even most preferably of at most 14 g/10 min or at most 12 g/10 min.

With preference, the content of the polypropylene post-consumer resin (PCR-PP) in the polypropylene-based composition is at least 38 wt% as based on the total weight of the polypropylene-based composition, preferably at least 40 wt%, more preferably at least 42 wt%, even more preferably at least 45 wt%, most preferably at least 50 wt%, and even most preferably of at least 52 wt%.

The selected polypropylene post-consumer resin (PCR-PP) may comprise up to 25 wt% of polyethylene relative to the total weight of the polypropylene post-consumer resin (PCR-PP).

In an embodiment, the component A is a blend of recycled polypropylene and recycled polyethylene, wherein the content of polyethylene is ranging from 1 to 27 wt% relative to the total weight of component A, preferably from 2 to 25 wt%, more preferably from 3 to 20 wt%, even more preferably from 4 to 18 wt% and most preferably from 5 to 15 wt%.

The presence of polyethylene in component A cannot be avoided and it is due to the recycling process. The polyethylene content of component A is different from the specifically added polyethylene resin of component C, when present.

Following its collection, the PCR needs to be processed. The processing comprises the steps of:

- recovering the polypropylene post-consumer resin (PCR-PP) from the domestic or household polymer waste, and/or the end of life vehicles waste by separating it,
- grinding, and
- cleaning.

The above grinding and cleaning steps may be performed in any order. The separation of domestic waste into several fractions such as polypropylene post-consumer resin (PCR-PP) can be performed by any method generally used in the industry such as near-infrared analysis (NIR), wherein the respective polymers are identified by their NIR-fingerprint. Further separation can be made according to colour with known separation systems.

Cleaning is preferably done in a liquid bath. The preferred liquid is water. Depending upon the density of the liquid, the cleaning step may also be used to eliminate undesired components of the domestic polymer waste. For example, polyethylene and polypropylene waste will generally float on water, while components such as metals sink.

Preferably the grinding step is performed so as to obtain the PCR in a flake form.

<u>Selection of the virgin polypropylene resin (component B)</u>

In the process of the invention, the polypropylene post-consumer resin (PCR-PP) is blended with a virgin polypropylene resin (component B), being preferably a heterophasic propylene copolymer, having an MI2 ranging from 0.1 to 10.0 g/10 min as determined according to ISO 1133 conditions M, at a temperature of 230 °C and under a load of 2.16 kg, preferably ranging from 0.1 to 5.0 g/10 min.

The polypropylene resin can be homopolymer or copolymer of propylene and at least one comonomer. Said comonomers can be selected from the group consisting of ethylene and $C_4$-$C_{10}$ alpha-olefins, such as 1-butene, 1-pentene, 1-hexene, 1-octene.

In a preferred embodiment of the invention, the polypropylene resin is a homopolymer of propylene. A homopolymer according to this invention has less than 0.2 wt%, preferably less than 0.1 wt%, more preferably less than 0.05 wt% and most preferably less than 0.005 wt%, of alpha-olefins other than propylene in the polymer. Most preferred, no other alpha-olefins are detectable. Accordingly, when the polypropylene resin is a homopolymer of propylene, the comonomer content in the polypropylene is less than 0.2 wt%, more preferably less than 0.1 wt%, even more preferably less than 0.05 wt% and most preferably less than 0.005 wt% based on the total weight of the polypropylene.

In case the polypropylene resin is a random copolymer of propylene and at least one comonomer, it comprises at least 0.1 wt% of comonomer(s), preferably at least 1 wt% as based on the total weight of the random copolymer of propylene and at least one comonomer. With preference, it comprises up to 10 wt% of comonomer(s) and most preferably up to 6 wt%. Preferably, the random copolymers are copolymers of propylene and ethylene.

In a preferred embodiment, the polypropylene resin is a heterophasic propylene copolymer resin. The heterophasic propylene copolymers comprise a matrix propylene polymer phase and a dispersed phase of a rubber. With preference, the rubber is ethylene propylene rubber.

The heterophasic propylene copolymers of the present invention as defined above can be produced by sequential polymerization in a series of polymerization reactors in presence of a catalyst system, wherein in a first polymerization stage the propylene polymer is produced, and in a second polymerization stage the rubber is produced by copolymerizing ethylene and at least one further olefin different from ethylene. The catalyst system is added to the first polymerization stage.

The catalyst system may comprise a Ziegler-Natta catalyst. The term "Ziegler-Natta catalysts" refers to catalysts of the general formula MXn, wherein M is a transition metal compound selected from group IV to VII, wherein X is a halogen, and wherein n is the valence of the metal. Preferably the metal is titanium, chromium or vanadium. Most preferably, the metal is titanium.

The Ziegler-Natta catalyst system, in accordance with the invention, comprises a titanium compound having at least one titanium-halogen bond and an internal electron donor, both on a suitable support, an organoaluminium compound, and an optional external donor. A suitable support is, for example, a magnesium halide in an active form. A suitable external donor (ED) is, for example, a phthalate or a succinate or a diether compound. The organoaluminium compound used in the process of the present invention is triethyl aluminium (TEAL).

Advantageously, the triethyl aluminium has a hydride content, expressed as $AlH_3$, of less than 1.0 wt% with respect to the triethyl aluminium. More preferably, the hydride content is less than 0.5 wt%, and most preferably the hydride content is less than 0.1 wt%. It would not depart from the scope of the invention if the organoaluminium compound contains minor amounts of other compounds of the trialkyl aluminium family, such as triisobutyl aluminium, tri-n-butyl aluminium, and linear or cyclic alkyl aluminium compounds containing two or more Al atoms, provided they show polymerization behaviour comparable to that of TEAL.

In the process of the present invention, the molar ratio Al/Ti is not particularly specified. However, it is preferred that the molar ratio Al/Ti is at most 100.

If an external donor is present, it is preferred that the molar ratio Al/ED, with ED denoting external electron donor, is at most 120, more preferably it is within the range of 5 to 120, and most preferably within the range of 10 to 80. Before being fed to the polymerization reactor, the catalytic system preferably undergoes a premix and/or a pre-polymerization step. In the premix step, the triethyl aluminium (TEAL) and the external electron donor (ED) - if present -, which have been pre-contacted, are mixed with the Ziegler-Natta catalyst at a temperature within the range of 0 °C to 30 °C, preferably within the range of 5 °C to 20 °C, for up to 15 min. The mixture of TEAL, external electron donor (if present) and Ziegler-Natta catalyst is prepolymerized with propylene at a temperature within the range of 10 °C to 100 °C, preferably within the range of 10 °C to 30 °C, for 1 to 30 min, preferably for 2 to 20 min.

In the first stage, the polymerization of propylene and one or more optional comonomers can, for example, be carried out in liquid propylene as reaction medium (bulk polymerization). It can also be carried out in diluents, such as hydrocarbon that is inert under polymerization conditions (slurry polymerization). It can also be carried out in the gas phase. Those processes are well known to one skilled in the art.

Diluents, which are suitable for being used in accordance with the present invention, may comprise but are not limited to hydrocarbon diluents such as aliphatic, cycloaliphatic and aromatic hydrocarbon solvents, or halogenated versions of such solvents. Non-limiting illustrative examples of solvents are butane, isobutane, pentane, hexane, heptane, cyclopentane, cyclohexane, cycloheptane, methyl cyclopentane, methyl cyclohexane, isooctane, benzene, toluene, xylene, chloroform, chlorobenzenes, tetrachloroethylene, dichloroethane and trichloroethane.

For the present invention, the propylene polymers are preferably produced by polymerization in liquid propylene at temperatures within the range of 20 °C to 100 °C. Preferably, temperatures are within the range of 60 °C to 80 °C. The pressure can be atmospheric or higher. Preferably, the pressure is ranging between 25 and 50 bars.

Hydrogen is used to control the chain lengths of the propylene polymers. For the production of a propylene polymer with higher MI2, i.e. with lower average molecular weight and shorter polymer chains, the concentration of hydrogen in the polymerization medium needs to be increased. Inversely, the hydrogen concentration in the polymerization medium has to be reduced in order to produce a propylene polymer with lower MI2, i.e. with higher average molecular weight and longer polymer chains.

In such sequential arrangement of polymerization reactors, the propylene homopolymer withdrawn from one reactor is transferred to the one following in the series, where the polymerization is continued. To produce propylene homopolymer fractions of different melt indexes, the polymerization conditions in the respective polymerization reactors need to be different, for example in that the hydrogen concentration in the polymerization reactors differs.

The melt flow index (MI2) of the propylene polymer produced in the second reactor is calculated using the following equation (2):

$$\text{Log (MI2}_{final}) = w_{B1} \times \text{Log (MI2}_{B1}) + w_{B2} \times \text{Log(MI2}_{B2}) \qquad (2)$$

wherein $\text{MI2}_{final}$ is the melt flow index of the total propylene polymer produced, $\text{MI2}_{B1}$ and $\text{MI2}_{B2}$ are the respective melt flow index of the propylene polymers fractions produced in the first and the second polymerization loop reactors, and $w_{B1}$ and $w_{B2}$ are the respective weight fractions of the propylene polymers produced in the first and in the second polymerization loop reactors as expressed in weight percent (wt%) of the total propylene polymer produced in the two polymerization loop reactors. These weight fractions are also commonly described as the contribution by the respective loop.

The matrix propylene polymer, preferably propylene homopolymer, can be made for example in loop reactors or in a gas phase reactor. The propylene polymer produced in this way, in a first polymerization stage, is transferred to a second polymerization stage, into one or more secondary reactors where ethylene and at least one further olefin different from ethylene are added to produce the rubber. For example, the further olefin is propylene. Thus, the rubber produced is ethylene propylene rubber (EPR). Preferably, this polymerization step is done in a gas phase reactor. The propylene copolymer can be prepared using a controlled morphology catalyst that produces rubber spherical domains dispersed in a polypropylene matrix. The amount and properties of the components are controlled by the process conditions.

The average molecular weight of the rubber, for which the intrinsic viscosity is a measure, is controlled by addition of hydrogen to the polymerization reactors of the second polymerization stage. The amount of hydrogen added is such that the rubber as an intrinsic viscosity 2.0 dl/g, and of at most 5.5 dl/g, measured in tetralin at 135 °C following ISO 1628. The contribution of the second polymerization stage, i.e. the rubber content of the heterophasic propylene copolymer is from 5 to 50 wt% relative to the total weight of the heterophasic propylene copolymer.

The heterophasic propylene copolymers, according to the invention, may contain additives such as, by way of example, antioxidants, light stabilizers, acid scavengers, flame retardants, lubricants, antistatic additives, nucleating/clarifying agents, colourants. An overview of such additives may be found in Plastics Additives Handbook, ed. H. Zweifel, 5th edition, 2001, Hanser Publishers.

The antioxidants used in the heterophasic propylene copolymers of the present invention, preferably have anti-gas fading properties. The preferred antioxidants are selected from the group consisting of phosphites, hindered phenols, hindered amine stabilizers and hydroxylamines. An example of a suitable antioxidant additivation is a blend of Irgafos 168 and Irganox 3114. Alternatively, phenol-free antioxidant additivations are suitable as well, such as for example those based on hindered amine stabilizers, phosphites, hydroxylamines or any combination of these. In general, the antioxidants are added to the propylene homopolymer in an amount from 100 ppm to 2000 ppm with the exact amount depending upon the nature of the antioxidant, the processing conditions and other factors.

After the last polymerization reactor, the polymers are recovered as a powder and can then be pelletized or granulated.

With preference, the component B has an MI2 of at least 0.2 g/10 min as determined according to ISO 1133 conditions M, at a temperature of 230 °C and under a load of 2.16 kg, and preferably of at least 0.3 g/10 min.

In an embodiment, component B has an MI2 of at most 9.0 g/10 min as determined according to ISO 1133 conditions M, at a temperature of 230 °C and under a load of 2.16 kg, preferably of at most 8.0 g/10 min, preferably of at most 7.0 g/10 min, preferably of at most 6.0 g/10 min, preferably of at most 5.0 g/10 min, preferably of at most 4.5 g/10 min, preferably of at most 4.0 g/10 min, more preferably of at most 3.5 g/10 min, even more preferably of at most 3.0 g/10 min, most preferably of at most 2.5 g/10 min, even most preferably of at most 2.0 g/10 min, or 1.5 g/10 min, or less than 1.0 g/10 min, preferably of at most 0.9 g/10 min, more preferably of at most 0.8 g/10 min, even more preferably of at most 0.5 g/10 min.

Examples of commercially available heterophasic propylene copolymers that can be used in some or all embodiments of the invention are polypropylene PPC 2660 (having an MI2 of 0.8 g/10 min as determined by ISO 1133 at 230 °C/ 2.16 kg); polypropylene PPC 1645 (having an MI2 of 0.3 g/10 min as determined by ISO 1133 at 230 °C/ 2.16 kg); polypropylene PPC 1640 (having an MI2 of 0.3 g/10 min as determined by ISO 1133 at 230 °C/ 2.16 kg) all marketed by TOTAL®.

An example of a commercially available propylene homopolymer suitable according to the invention is polypropylene PPH 1060 (having an MI2 of 0.3 g/10 min as determined by ISO 1133 at 230 °C/ 2.16 kg) marketed by TOTAL®.

In a preferred embodiment, the content of component B is ranging from 10 to 60 wt% as based on the total weight of the polypropylene-based composition, preferably from 15 to 60 wt%.

For example, the content of component B is at least 18 wt% as based on the total weight of the polypropylene-based composition, preferably at least 20 wt%, more preferably at least 22 wt%, and even more preferably at least 25 wt%.

Preferably, the content of component B is at most 55 wt% as based on the total weight of the polypropylene-based composition, preferably at most 50 wt%, more preferably at most 48 wt%, even more preferably at most 45 wt%, most preferably at most 42 wt% and even most preferably at most 40 wt%.

Selection of the polyethylene resin (component C)

In a preferred embodiment of the process of the invention, components A and B are also blended with a component C to form the polypropylene-based composition. The component C is a polyethylene resin having an MI2 ranging from 0.1 to 5.0 g/10 min as determined according to ISO 1133 conditions D, at a temperature of 190 °C and under a load of 2.16 kg.

With preference, the polyethylene resin used as component C is a high-density polyethylene resin having a density of at least 0.940 g/cm$^3$ as determined according to ISO 1183 at 23 °C, preferably of at least 0.945 g/cm$^3$, more preferably of at least 0.950 g/cm$^3$, and even more preferably of at least 0.955 g/cm$^3$.

In an embodiment, the component C has an MI2 ranging from 0.2 to 2.5 g/10 min as determined according to ISO 1133 conditions D, at a temperature of 190 °C and under a load of 2.16 kg, preferably from 0.5 to 1.0 g/10 min.

With preference, the component C has an MI2 of at least 0.2 g/10 min as determined according to ISO 1133 conditions D, at a temperature of 190 °C and under a load of 2.16 kg, preferably of at least 0.3 g/10 min, more preferably of at least 0.4 g/10 min and even more preferably of at least 0.5 g/10 min.

In an embodiment, the component C has an MI2 of at most 4.5 g/10 min as determined according to ISO 1133 conditions D, at a temperature of 190 °C and under a load of 2.16 kg, preferably of at most 4.0 g/10 min, more preferably of at most 3.5 g/10 min, even more preferably of at most 3.0 g/10 min, most preferably of at most 2.5 g/10 min, even most preferably of at most 2.0 g/10 min, or 1.5 g/10 min, or 1.0 g/10 min, or 0.8 g/10 min.

The polyethylene resin to be used as component C can be a virgin resin, a polyethylene post-consumer resin (PCR-PE), a polyolefin post-consumer resin (PCR-PO), or a mixture thereof. With preference, component C is selected from a polyethylene post-consumer resin (PCR-PE) and/or a polyolefin post-consumer resin (PCR-PO).

An example of commercially available stream of polyethylene post-consumer resin (PCR-PE) suitable for the process of the invention is KWR105M2 marketed by KW Plastics.

The polyethylene post-consumer resin (PCR-PE) that can be used in accordance with the invention is preferably selected from HDPE dairy packaging waste.

In a preferred embodiment, the polyethylene post-consumer resin (PCR-PE) that can be used in accordance with the invention comprises less than 10 wt% as based on the total weight of the PCR of polymers other than polyethylene.

The use of a polyethylene post-consumer resin (PCR-PE) as component C allows the increase of the total content of the post-consumer resins (PCR$_T$) in the polypropylene-based composition.

The polyolefin post-consumer resin (PCR-PO) suitable for the invention comprising at least 30 wt% of polyethylene based on the total weight of the polyolefin post-consumer resin.

With preference the polyolefin post-consumer resin (PCR-PO) comprises at least 40 wt% of polyethylene based on the total weight of the polyolefin post-consumer resin, preferably at least 50 wt%, more preferably at least 60 wt% and most preferably at least 70 wt%

Examples of polyolefin post-consumer resin (PCR-PO) are Regranulat 920-L and Regranulat 920-H both marketed by Vogt-plastic GmbH.

The use of a polyolefin post-consumer resin (PCR-PO) as component C allows the increase of the total content of the post-consumer resins (PCR$_T$) in the polypropylene-based composition, and at the same time lowering the overall costs of the composition. However, as the polyolefin post-consumer resin (PCR-PO) usually comprises important amount of low-density polyethylene (LDPE) and linear low-density polyethylene (LLDPE), it is preferable to keep the total amount of the polyolefin post-consumer resin added in the composition below 10 wt% as based on the total weight of the polypropylene-based composition, preferably below 8 wt%.

Thus, in a preferred embodiment, the component C is selected from a polyethylene post-consumer resin (PCR-PE) and/or a polyolefin post-consumer resin (PCR-PO); and the total content post-consumer resin (PCR$_T$) in the polypropylene-based composition is ranging from 35 to 80 wt% as based on the total weight of the polypropylene-based composition.

The total content post-consumer resin (PCR$_T$) in the polypropylene-based composition is the sum of the content of component A (PCR-PP) and of the post-consumer resin in component C. The total content of post-consumer resin (wt% PCR$_T$) in the polypropylene-based composition is defined by the equation (1):

$$\text{wt\% PCR}_T = \text{wt\% PCR-PP} + \text{wt\% PCR-PE} + \text{wt\% PCR-PO} \quad (1)$$

With preference, the component C is a post-consumer resin selected from a polyethylene post-consumer resin (PCR-PE) and/or a polyolefin post-consumer resin (PCR-PO), and the total content post-consumer resin (PCR$_T$) in the polypropylene-based composition is at least 40 wt% as based on the total weight of the polypropylene-based composition, preferably at least 42 wt%, more preferably at least 45 wt%, even more preferably at least 50 wt% and most preferably at least 52 wt%, at least 60 wt% or at least 70 wt%.

The addition of component C in the polypropylene-based composition contributes to the achievement of the desired good balance of properties obtained in the propylene-based composition. It was indeed found that the addition of polyethylene helps enhancing the impact properties while keeping at the same time good mechanical properties such as stiffness. Preferably, the content of component C provided in the polypropylene-based composition is ranging from 5 to 25 wt% as based on the total weight of the polypropylene-based composition.

In a preferred embodiment of the invention, the content of component C in the polypropylene-based composition is at most 24 wt% as based on the total weight of the polypropylene-based composition, preferably at most 22 wt%, and more preferably at most 20 wt%.

In another embodiment, the content of component C in the polypropylene-based composition is at least 6 wt% as based on the total weight of the polypropylene-based composition, preferably of at least 7 wt% more preferably of at least 8 wt%, even more preferably at least 9 wt%, and most preferably at least 10 wt%.

Selection of the elastomer (component D)

In a preferred embodiment, in order to enhance the impact properties, the process further comprises the step of providing a component D being one or more elastomers and the step of melt-blending the components to form a polypropylene-based composition comprises melt-blending the component D with the other components to form the polypropylene-based composition.

The component D, when present, is preferably selected from copolymers of ethylene with a C$_3$-C$_{10}$ α-olefin containing at least 20 wt %, preferably from 20 to 70 wt %, of C$_3$-C$_{10}$ α-olefin ($^{13}$C-NMR analysis). Suitable and preferred copolymers component (D) commercially available are obtained with metallocene or constrained geometry catalysis and typically have molecular weight distribution (Mw/Mn measured via GPC) ranging from 1 to 3.

With preference, component D is selected from elastomeric copolymers of ethylene with 1-octene, elastomeric copolymers of ethylene with 1-butene and any mixture thereof.

For example, component D is selected from:

- elastomeric copolymers of ethylene with 1-octene having from 20 wt % to 45 wt % of 1-octene ($^{13}$C-NMR analysis); and/or
- elastomeric thermoplastic copolymers of ethylene with 1-butene having from 20 wt % to 40 wt % of 1-butene ($^{13}$C-NMR analysis); and/or
- elastomeric thermoplastic copolymers of ethylene with propene.

Non-exhaustive specific examples of elastomer that can be used in the process according to the invention are:

a) an ethylene-butene-1 random copolymer rubber such as:

- ENGAGE 7642 produced by The Dow Chemical Co. Ltd., having an MI2 of 0.5 g/10 min.
- ENGAGE 7447 produced by The Dow Chemical Co. Ltd., having an MI2 of 5.0 g/10 min.
- ENGAGE 7467 produced by The Dow Chemical Co. Ltd., having an MI2 of 1.2 g/10 min.
- Tafmer A0550S from Mitsui having an MI2 of 0.5 g/10 min.
- Tafmer A1550S from Mitsui having an MI2 of 1.0 g/10 min.
- Lucene 168 from LG having an MI2 of 1.2 g/10 min.
- Lucene 175 from LG having an MI2 of 1.2 g/10 min.

- Lucene 565 from LG having an MI2 of 1.2 g/10 min.

b) an ethylene-octene-1 random copolymer rubber such as:

- Affinity EG8100 from The Dow Chemical Co. Ltd., having an MI2 of 1.0 g/10 min.
- Affinity EG8150 from The Dow Chemical Co. Ltd., having an MI2 of 0.5 g/10 min.

c) an ethylene propylene copolymer rubber such as:

- Exxon IT0316 from ExxonMobil, having an ethylene content of 16 wt%.

For the cited elastomers, the MI2 was determined according to ISO 1133 (190 °C /2.16 Kg).

In an embodiment, alternative or cumulative, the composition further comprises from 0.1 to 15 wt%, as based on the total weight of the polypropylene-based composition of one or more styrene-based thermoplastic elastomers (TPE-S) selected from SIS (Styrene isoprene styrene block copolymers), SEPS (Hydrogenated Styrene isoprene styrene block copolymers), SBS (Styrene butadiene styrene block copolymers), SEBS (Hydrogenated styrenic butadiene copolymers), SBSS (Styrene butadiene styrene styrene block copolymers), and any mixture thereof.

Preferably, the polypropylene-based composition comprises at least 0.1 wt% of TPE-S, as based on the total weight of the polypropylene-based composition, preferably at least 0.5 wt%, more preferably at least 1.0 wt%, even more preferably of at least 1.5 wt%, most preferably at least 2.5 wt% and even most preferably at least 5.0 wt%.

With preference, the polypropylene-based composition comprises at most 9.8 wt% of TPE-S, as based on the total weight of the polypropylene-based composition, preferably at most 9.5 wt%, more preferably at most 9.3 wt%, even more preferably at most 9.1 wt%, most preferably at most 9.0 wt%, and even most preferably at most 8.5 wt%.

In a preferred embodiment, the polypropylene-based composition comprises from 0.1 to 9.8 wt% of TPE-S as based on the total weight of the polypropylene-based composition, preferably from 0.5 to 9.5 t%, more preferably from 1.0 to 9.3 w%, even more preferably from 1.5 to 9.1 wt%, most preferably from 2.5 to 9.0 wt% and even most preferably from 5.0 to 8.5 wt%.

Component D has an MI2 ranging from 0.5 to 5.0 g/10 min as determined according to ISO 1133 conditions D, at a temperature of 190 °C and under a load of 2.16 kg.

With preference, component D has an MI2 of at most 4.5 g/10 min as determined according to ISO 1133 conditions D, at a temperature of 190 °C and under a load of 2.16 kg, preferably of at most 4.0 g/10 min, more preferably of at most 3.5 g/10 min, even more preferably of at most 3.0 g/10 min, most preferably of at most 2.5 g/10 min and even most preferably of at most 2.0 g/10 min.

The polypropylene-based composition comprises from 0 to 10 wt% of component D (i.e. one or more elastomers), as based on the total weight of the polypropylene-based composition, preferably from 0.1 to 10 wt%. The addition of more than 10 wt% of component D in the polypropylene-based composition may influence negatively the mechanical properties such as the flexural modulus.

Preferably, the polypropylene-based composition comprises at least 0.1 wt% of component D (i.e. one or more elastomers), as based on the total weight of the polypropylene-based composition, preferably at least 0.5 wt%, more preferably at least 1.0 wt%, even more preferably of at least 1.5 wt%, most preferably at least 2.5 wt% and even most preferably at least 5.0 wt%.

With preference, the polypropylene-based composition comprises at most 9.8 wt% of component D (i.e. one or more elastomers), as based on the total weight of the polypropylene-based composition, preferably at most 9.5 wt%, more preferably at most 9.3 wt%, even more preferably at most 9.1 wt%, most preferably at most 9.0 wt%, and even most preferably at most 8.5 wt%.

In a preferred embodiment, the polypropylene-based composition comprises from 0.1 to 9.8 wt% of component D (i.e. one or more elastomers), as based on the total weight of the polypropylene-based composition, preferably from 0.5 to 9.5 t%, more preferably from 1.0 to 9.3 w%, even more preferably from 1.5 to 9.1 wt%, most preferably from 2.5 to 9.0 wt% and even most preferably from 5.0 to 8.5 wt%.

According to the invention, and as demonstrated in the examples, the content of the elastomer of the polypropylene-based composition is lowered due to the addition of the polyethylene resin (component C).

Selection of the filler (component E)

In a preferred embodiment, in order to enhance the mechanical properties, the process further comprises the step of providing a component E being a filler and the step of melt-blending the components to form a polypropylene-based composition comprises melt-blending the component E with the other components to form the polypropylene-based composition. With preference, the filler is one or more talc mineral fillers.

It is understood that the process of the invention may comprise the addition of both components D and E in the propylene-based composition or of any one of the components D or E.

In compositions comprising component D but not component E, the person skilled in the art would find an advantage to keep the content of component D to be less than 10 wt% as based on the total weight of the polypropylene-based composition. In compositions comprising both component D and E, the content of component D can be up to 10 wt% as based on the total weight of the polypropylene-based composition.

Component E is selected from talc mineral filler, wollastonite, calcium carbonate, glass fibres, bamboo fibres, flax fibres, hemp fibres, and any mixture thereof.

The talc mineral filler component (E) is preferably a Magnesium-Silicate-Hydrate with lamellar structure (platy) in particle form having a top cut ranging from 1 to 40 micrometers. With preference the one or more talc mineral fillers have a median particle size (d50) of less than 50 $\mu$m as determined according to ISO 13317-3 by Sedigraph, preferably less than 20 $\mu$m, more preferably less than 15 $\mu$m and most preferably at most 10 $\mu$m.

With preference, the one or more talc mineral fillers have a median particle size (d50) of at least 0.1 $\mu$m as determined according to ISO 13317-3 by Sedigraph, preferably at least 1.0 $\mu$m, more preferably at least 1.5 $\mu$m, even more preferably of at least 1.8 $\mu$m, most preferably of at least 2.0, and even most preferably of at least 2.1 $\mu$m. Specific examples of talc that can be used as component E of the present invention is talc filler Finntalc MO5SL and Finntalc M15, both manufactured and sold by Mondo Minerals (CAS-No. 14807-96-6. Both of them are considered to be standard talc in the context of the invention. Finntalc MO5SL has a median particle size (d50) of 2.2 $\mu$m. Finntalc M15 has a median particle size (d50) of 4.5 $\mu$m.

Other examples of talc that can be used are Mistron® G7C and Medium white Luzenac HAR® T84 both manufactured and sold by Imerys.

The polypropylene-based composition comprises from 0 to 20 wt% of component E (with preference being one or more talc mineral fillers), as based on the total weight of the polypropylene-based composition, preferably from 0.1 to 15 wt%.

Preferably, the polypropylene-based composition comprises at least 0.1 wt% of component E (with preference being one or more talc mineral fillers), as based on the total weight of the polypropylene-based composition, preferably at least 0.5 wt%, more preferably at least 1.0 wt%, even more preferably of at least 1.5 wt%, most preferably at least 2.5 wt% and even most preferably at least 5.0 wt%.

With preference, the polypropylene-based composition comprises at most 14.0 wt% of component E (with preference being one or more talc mineral fillers), as based on the total weight of the polypropylene-based composition, preferably at most 13 wt%, more preferably at most 12 wt%, even more preferably at most 11 wt%, and most preferably at most 10 wt%.

It is understood that the process of the invention may comprise the addition of all components C, D and E in the propylene-based composition, or of one or two of the components C, D or E.

Thus, the compositions according to the invention may comprise

- components A and B, or
- components A, B and C, or
- components A, B and D, or
- components A, B and E, or
- components A, B, C and D, or
- components A, B, C and E, or
- components A, B, D and E, or
- components A, B, C, D and E.

The polypropylene-based composition

The inventive polypropylene-based composition has a defined total polyethylene content. When Component A is a blend of recycled polypropylene and recycled polyethylene, the total polyethylene content in the polypropylene-based composition is defined by the sum of the polyethylene content in component A and, when present, the content of the recycled material in component C selected from polyethylene post-consumer resin (PCR-PE) and/or polyolefin post-consumer resin (PCR-PO).

Component A contains from 3 to 20 wt% of polyethylene, being recycled polyethylene, relative to the total weight of component A. The person skilled in the art would find a benefit to having a total polyethylene content in the polypropylene-based composition, ranging from 5 to 25 wt% as based on the total weight of the polypropylene-based composition. Thus, when the polypropylene-based composition contains a component C that also contains polyethylene, the total polyethylene content in the polypropylene-based composition is defined by the sum of the polyethylene content in component A and of the polyethylene content in component C.

Thus, in a preferred embodiment, the polypropylene-based composition comprises a total polyethylene content ranging from 6 wt% to 24 wt%, preferably ranging from 7 wt% to 22 wt%, more preferably ranging from 8 wt% to 20 wt%, even more preferably ranging from 9 wt% to 18 wt%, most preferably ranging from 10 wt% to 16 wt%, and even most preferably from 10 wt% to 15 wt%. In a preferred embodiment, the total polyethylene content in the polypropylene-based composition is defined by the sum of the polyethylene content in component A and in component C and is ranging from 5 to 15 wt% as based on the total weight of the polypropylene-based composition.

The invention provides a process to produce a low MI2 propylene-based composition having an MI2 ranging from 1.0 to 25.0 g/10 min as determined according to ISO 1133 conditions M, at a temperature of 230 °C and under a load of 2.16 kg, from general PCR having higher MI2; preferably ranging from 1.0 to 8.0 g/10 min.

With preference, the polypropylene-based composition has an MI2 of at least 1.2 g/10 min as determined according to ISO 1133 conditions M, at a temperature of 230 °C and under a load of 2.16 kg, and preferably of at least 1.5 g/10 min.

With preference, the polypropylene-based composition has an MI2 of at most 20.0 g/10 min as determined according to ISO 1133 conditions M, at a temperature of 230 °C and under a load of 2.16 kg, preferably of at most 15 g/10 min, preferably of at most 12 g/10 min, preferably of at most 10 g/ 10 min, preferably of at most 8 g/ 10 min, preferably of at most 6.0 g/ min, preferably of at most 5.0 g/10 min, more preferably of at most 4.5 g/10 min, even more preferably of at most 4.0 g/10 min, most preferably of at most 3.5 g/10 min, and even most preferably of at most 3.0 g/10 min.

The invention provides the use of polyethylene to enhance the impact properties while keeping good stiffness instead of, or in addition to, elastomeric polymers. The process allows the reduction of the quantity of elastomeric polymer in the composition rendering the process cost-effective. Moreover, the polyethylene added can be a recycled material as well, thus increasing the total content of recycled material in the composition. As a result, the content of acetone-insoluble is below a defined threshold. For example, the polypropylene-based composition has an acetone insolubles content of at most 20 wt% as based on the total weight of the polypropylene-based composition, preferably of at most 18 wt%, and more preferably of at most 15 wt%.

With preference, the polypropylene-based composition has an acetone insolubles content of at least 1.0 wt% as based on the total weight of the polypropylene-based composition, preferably of at least 1.5 wt%, more preferably of at least 2.0 wt%.

The polypropylene-based composition has an improved balance between stiffness and impact properties.

Preferably, the polypropylene-based composition has a flexural modulus of at least 950 MPa as determined according to ISO 178, preferably of at least 1000 MPa, more preferably of at least 1050 MPa, and even more preferably of at least 1100 MPa.

In a preferred embodiment, the polypropylene-based composition has an Izod impact strength (notched) at 23 °C of at least 7 kJ/m$^2$ as determined according to ISO 180, preferably of at least 15 kJ/m$^2$, more preferably of at least 20 kJ/m$^2$, even more preferably of at least 30 kJ/m$^2$, most preferably of at least 40 kJ/m$^2$ and even most preferably of at least 50 kJ/m$^2$.

With preference, the polypropylene-based composition has an Izod impact strength (notched) at -20 °C of at least 3.0 kJ/m$^2$ as determined according to ISO 180, preferably of at least 3.5 kJ/m$^2$, and even more preferably of at least 4.0 kJ/m$^2$.

The polypropylene-based composition of the invention comprises from 35 to 80 wt% of a component A being a polypropylene post-consumer resin (PCR-PP) as based on the total weight of polypropylene-based composition, the component A being a polypropylene post-consumer resin (PCR-PP) having an MI2 ranging from 7 to 70 g/10 min as determined according to ISO 1133 conditions M, at a temperature of 230 °C and under a load of 2.16 kg, and the polypropylene-based composition having:

- an MI2 ranging from 1.0 to 8.0 g/10 min as determined according to ISO 1133 conditions M, at a temperature of 230 °C and under a load of 2.16 kg;
- an acetone insolubles content ranging from 1.0 to 15 wt% as based on the total weight of the polypropylene-based composition; and
- a total polyethylene content ranging from 5 to 25 wt%, as based on the total weight of the polypropylene-based composition, preferably ranging from 5 to 15 wt%.

In an embodiment, The polypropylene-based composition of the invention comprises from 35 to 80 wt% of a component A being a polypropylene post-consumer resin (PCR-PP) as based on the total weight of polypropylene-based composition, the component A being a polypropylene post-consumer resin (PCR-PP) having an MI2 ranging from 7 to 70 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A; and the polypropylene-based composition having:

- an MI2 ranging from 1.0 to 8.0 g/10 min as determined according to ISO 1133 conditions M, at a temperature of 230 °C and under a load of 2.16 kg;
- an acetone insolubles content ranging from 1.0 to 15 wt% as based on the total weight of the polypropylene-based composition; and
- a total polyethylene content ranging from 5 to 25 wt%, as based on the total weight of the polypropylene-based composition, preferably ranging from 5 to 15 wt%.

With preference, the component A being a polypropylene post-consumer resin (PCR-PP) having an MI2 ranging from 7 to 20 g/10 min as determined according to ISO 1133 conditions M, at a temperature of 230 °C and under a load of 2.16 kg; and/or the polypropylene-based composition has an MI2 ranging from 1.0 to 25.0 g/10 min as determined according to ISO 1133 conditions M, at a temperature of 230 °C and under a load of 2.16 kg.

Preferably, said composition has a flexural modulus of at least 1100 MPa as determined according to ISO 178, an Izod impact strength (notched) at 23 °C of at least 50 kJ/m$^2$ as determined according to ISO 180, and an Izod impact strength (notched) at - 20 °C of at least 4.0 kJ/m$^2$ as determined according to ISO 180.

More preferably, said composition comprises a total content post-consumer resin (PCR$_T$) of more than 50 wt% as based on the polypropylene-based composition.

In an embodiment, a foamed article is produced from a blend comprising the polypropylene composition-based according to the second aspect or to the third aspect, with one or more foam expansion agents.

For example, the foam expansion agent may be selected from one or more organic substances saturated hydrocarbons such as propane, butane, pentane, hexane and heptane; alicyclic hydrocarbons such as cyclobutane, cyclopentane and cyclohexane; ethers such as dimethyl ether, diethyl ether and methyl ethyl ether; alcohols such as methanol and ethanol; halogenated hydrocarbons such as trichloromonofluoro methane, dichlorodifluoromethane, dichlorotetrafluoroethane, trichlorotrifluoroethane, methyl chloride, methylene chloride and ethyl chloride, chlorofluoromethane, trifluoromethane, 1,1-difluoroethane, 1,2,2,2-tetrafluoroethane, and the like; citric acid and inorganic substances such as nitrogen, carbon dioxide, argon, air, water, inorganic carbonates, and any mixture thereof.

In an embodiment, the foam expansion agent may include inorganic substances selected from talc, calcium carbonate, silica, kaolin, barium sulfate, calcium hydroxide, aluminum hydroxide, aluminum oxide, titanium oxide, and zeolite; metal salts of fatty acid such as calcium stearate and barium stearate; and any combination thereof.

The amount of the foam expansion agent is suitably determined in consideration of the intended expansion ratio (apparent density) of the expanded beads. The organic and inorganic foaming agents are generally used in amounts of 5 to 50 parts by weight and 0.5 to 30 parts by weight, respectively, per 100 parts by weight of the resin particles.

When the organic foaming agent and inorganic foam expansion agents are used in combination, the above-exemplified organic and inorganic foam expansion agents may be arbitrarily selected and combined. In this case, it is preferred that the inorganic foam expansion agents are used in an amount of 30% by weight or more based on the total amount of the organic and inorganic foam expansion agents.

When nitrogen or air is used as a foam expansion agent, the amount of the foam expansion agents is such that it is forced into a closed vessel within a pressure range of 20 to 60 kgf/cm$^2$ immediately before commencement of expansion (or release). The amount of these foaming agents is appropriately selected depending on the relation with an expansion temperature of expanded beads to be obtained.

From the standpoint of environmental problem, the use of an inorganic foaming agent, particularly nitrogen, air, carbon dioxide or water is preferred. When water is used as a dispersing medium for dispersing the resin particles for the production of polypropylene by the above-described dispersion method, the water may be also used as a foaming agent. In this case, a water absorbing resin may be suitably incorporated into the base resin of the resin particles.

## TEST METHODS

The melt index (MI2) of polypropylene and polypropylene compositions is determined according to the method of standard ISO 1133:2005, conditions M, at a temperature of 230 °C and under a load of 2.16 kg.

The melt index (MI2) of polyethylene and polyethylene compositions is determined according to the method of standard ISO 1133:2005, conditions D, at a temperature of 190 °C and under a load of 2.16 kg.

The high load melt index (HLMI) of polyethylene and polyethylene compositions is determined according to the method of standard ISO 1133:2005, conditions G, at a temperature of 190 °C and under a load of 21.6 kg.

The density of polyethylene and polyethylene compositions is measured according to the method of standard ISO 1183 at a temperature of 23 °C.

The molecular weight Mn (number average molecular weight), Mw (weight average molecular weight), Mz (z average molecular weight) and molecular weight distribution d (Mw/Mn) and d' (Mz/Mw) are determined by size exclusion chromatography (SEC) and in particular by gel permeation chromatography (GPC). Briefly, a GPC-IR5 from Polymer Char was used: 10 mg polypropylene sample is dissolved at 160 °C in 10 mL of trichlorobenzene (technical grade) for 1 hour. Analytical conditions for the GPC-IR from Polymer Char are:

- Injection volume: +/- 0.4 mL;
- Automatic sample preparation and injector temperature: 160 °C;
- Column temperature: 145 °C;
- Detector temperature: 160 °C;
- Column set: 2 Shodex AT-806MS and 1 Styragel HT6E;
- Flow rate: 1 mL/min;
- Detector: IR5 Infrared detector (2800-3000 cm$^{-1}$);
- Calibration: Narrow standards of polystyrene (commercially available);
- Calculation for polypropylene: Based on Mark-Houwink relation ($\log_{10}(M_{PP}) = 0.965909x \log_{10}(M_{PS}) - 0,28264$); cut off on the low molecular weight end at $M_{PE} = 1000$;

The molecular weight averages used in establishing molecular weight/property relationships are the number average ($M_n$), weight average ($M_w$) and z average ($M_z$) molecular weight. These averages are defined by the following expressions and are determined from the calculated $M_i$:

$$M_n = \frac{\sum_i N_i M_i}{\sum_i N_i} = \frac{\sum_i W_i}{\sum_i W_i / M_i} = \frac{\sum_i h_i}{\sum_i h_i / M_i}$$

$$M_w = \frac{\sum_i N_i M_i^2}{\sum_i N_i M_i} = \frac{\sum_i W_i M_i}{\sum_i M_i} = \frac{\sum_i h_i M_i}{\sum_i M_i}$$

$$M_z = \frac{\sum_i N_i M_i^3}{\sum_i N_i M_i^2} = \frac{\sum_i W_i M_i^2}{\sum_i W_i M_i} = \frac{\sum_i h_i M_i^2}{\sum_i h_i M_i}$$

Here $N_i$ and $W_i$ are the number and weight, respectively, of molecules having molecular weight Mi. The third representation in each case (farthest right) defines how one obtains these averages from SEC chromatograms. $h_i$ is the height (from baseline) of the SEC curve at the $i_{th}$ elution fraction and $M_i$ is the molecular weight of species eluting at this increment.

The molecular weight distribution (MWD) is then calculated as Mw/Mn.

The comonomer content of a polypropylene is determined by $^{13}$C-NMR analysis of pellets according to the method described by G.J. Ray et al. in Macromolecules, vol. 10, n° 4, 1977, p. 773-778.

The $^{13}$C-NMR analysis is performed using a 400 MHz or 500 MHz Bruker NMR spectrometer under conditions such that the signal intensity in the spectrum is directly proportional to the total number of contributing carbon atoms in the sample. Such conditions are well known to the person skilled in the art and include for example sufficient relaxation time, etc. In practice, the intensity of a signal is obtained from its integral, i.e. the corresponding area. The data is acquired using proton decoupling, 2000 to 4000 scans per spectrum with 10 mm at room temperature through or 240 scans per spectrum with a 10 mm cryoprobe, a pulse repetition delay of 11 seconds and a spectral width of 25000 Hz (+/- 3000 Hz). The sample is prepared by dissolving a sufficient amount of polymer in 1,2,4-trichlorobenzene (TCB, 99%, spectroscopic grade) at 130 °C and occasional agitation to homogenise the sample, followed by the addition of hexadeuterobenzene ($C_6D_6$, spectroscopic grade) and a minor amount of hexamethyldisiloxane (HMDS, 99.5+ %), with HMDS serving as internal standard. To give an example, about 200 mg to 600 mg of polymer is dissolved in 2.0 mL of TCB, followed by addition of 0.5 mL of $C_6D_6$ and 2 to 3 drops of HMDS.

Following data acquisition, the chemical shifts are referenced to the signal of the internal standard HMDS, which is assigned a value of 2.03 ppm.

The flexural modulus was determined according to ISO 178.

The Charpy impact strength (notched) at 23 °C was determined according to ISO 179.

The Izod impact strength (notched) at 23 °C and at -20 °C was determined according to ISO 180.

Xylene solubles (XS) were determined as follows:
Between 4.5 and 5.5 g of a propylene polymer was weighed into a flask and 300 ml xylene were added. The xylene was heated under stirring to reflux for 45 minutes. Stirring was continued for 15 minutes exactly without heating. The flask was then placed in a thermostated bath set to 25 °C +/- 1 °C for 1 hour. The solution was filtered through Whatman n° 4 filter paper and exactly 100 ml of solvent were collected. The solvent was then evaporated and the residue dried and weighed. The percentage of xylene solubles ("XS") was then calculated according to:

$$\text{XS (in wt\%)} = (\text{Weight of the residue} / \text{Initial total weight of PP}) * 300$$

with all weights being in the same units, such as for example in grams.

Acetone insolubles (Ac Ins) are determined as follows: 100 ml of the filtrate of the solution in xylene (see above) and 700 ml of acetone are agitated overnight at room temperature in a hermetically sealed flask, during which time a precipitate is formed. The precipitate is collected on a metal mesh filter with a mesh width of 0.056 mm, dried and weighed. The percentage of acetone insolubles ("Ac Ins") is then calculated according to:

$$\text{Ac Ins (in wt\%)} = (\text{Weight of the residue} / \text{initial weight of PP}) * 300$$

with all weights being in the same units, such as for example in grams.

The amount of rubber in heterophasic propylene copolymer or in the polymer resulting from the polymer blend is determined as the acetone insolubles fraction of the xylene soluble fraction.

The intrinsic viscosity of the rubber is determined using the acetone insolubles fraction of the xylene soluble fraction of the heterophasic propylene copolymer. The intrinsic viscosity is determined in a capillary viscometer in tetralin at 135 °C.

The following non-limiting examples illustrate the invention.

**EXAMPLES**

The advantages of the inventive polypropylene-based compositions are shown in the following examples.

**Example 1 - Selection of the materials**

The following materials were selected to perform the process in accordance with the invention.

Table 1: characterization of suitable components A: polypropylene post-consumer resins (PCR-PP)

| PCR-PP | waste | wt%PE | MI2 (g/10 min) | Flexural Modulus (MPa) | Izod impact strength (notched) +23 °C (kJ/m$^2$) |
|---|---|---|---|---|---|
| PCR-PP1 | household | 10 | 15 | 1200 | 5.6 |
| PCR-PP2 | household | 10 | 10 | 1220 | 7.0 |
| PCR-PP3 | ELV | 20 | 8 | 950 | 7.0 |
| PCR-PP4 | household | 10 | 13 | 1100 | 4.5 |
| PCR-PP5 | household | 10 | 11.5 | 1100 | n.d. |
| PCR-PP6 | household | 10 | 11.5 | 1100 | n.d. |
| PCR-PP7 | n.d. | 10 | 9-17 | >1100 | >3.5 |
| n.d. = not determined | | | | | |

PCR-PP5 is PP Regranulat 500-S naturel marketed by Vogt-plastic GmbH. PCR-PP5 has a Charpy impact strength (notched) +23 °C of 5.8 kJ/m$^2$ as determined according to ISO 179. PCR-PP6 is PP Regranulat 500-S bunt marketed by Vogt-plastic GmbH.

PCR-PP7 is Vision PPC BC 1306 marketed by Veolia. PCR-PP7 is a propylene copolymer non-coloured, 100 % based on post-consumer feedstock known to have a good impact/stiffness balance.

Table 2: characterization of suitable components B: propylene copolymer resin

|  | unit | PPC1 | PPC2 | PPH |
|---|---|---|---|---|
| MI2 | g/10 min | 0.3 | 0.3 | 0.3 |
| Flexural Modulus | MPa | 1700 | 1350 | 1500 |
| Izod impact strength (notched) + 23 °C | kJ/m$^2$ | 50 | 80 | 7 |
| Izod impact strength (notched) - 20 °C | kJ/m$^2$ | 7 | 8 | 3 |
| C2 fluff | wt% | 4.5 | 8 | - |
| XS | wt% | 9.7 | 14 | n.d. |
| Ac Ins | wt% | 93.9 | 13.2 | n.d. |
| Mn | Da | 60,000 | 88,000 | n.d. |
| Mw | Da | 882,000 | 754,000 | n.d. |
| Mz | Da | 4,800,000 | 3,500,000 | n.d. |
| D (Mw/Mn) |  | 14.7 | 8.6 | n.d. |
| D' (Mz/Mw) |  | 5.5 | 4.6 | n.d. |
| n.d. = not determined | | | | |

PPC1 and PPC2 are heterophasic propylene copolymer resin, PPH is a homo polypropylene resin.

Table 3a: characterization of suitable components C1: virgin polyethylene

| PE | Grade | wt% PP | Flexural Modulus (MPa) | MI2 (g/10 min) | HLMI (g/10 min) | Density (g/cm$^3$) |
|---|---|---|---|---|---|---|
| PE1 | HDPE 5502 | - | 1200 | 0.25 | 22 | 0.954 |
| PE2 | HDPE 5802 | - | n.d. | 0.30 | 22 | 0.957 |
| n.d. = not determined | | | | | | |

HDPE 5502 and HDPE 5802 are marketed by TOTAL® and commercially available.

Table 3b: characterization of suitable components C2: polyethylene post-consumer resins (PCR-PE)

| PCR-PE | waste | wt% rPE | wt% rPP | MI2 (g/10 min) | HLMI (g/10 min) | Density (g/cm$^3$) |
|---|---|---|---|---|---|---|
| PCR-PE3 | Domestic waste | 90 | 10 | 0.4 | 45 | 0.957 |
| PCR-PE4 | Domestic waste | 94 | 6 | 0.3 | 35 | 0.960 |
| PCR-PE5 | Domestic waste | n.d. | n.d. | 0.6 | 50 | 0.959 |
| PCR-PE6 | Domestic waste | 97 | 3 | 0.5 | 50 | 0.95 |
| PCR-PE7 | Domestic waste | 99 | 1 | 0,4 | 45 | 0,95 |
| PCR-PE8 | Domestic waste | 97 | 3 | 0.4 | n.d. | 0.955 |
| n.d. = not determined | | | | | | |

PCR-PE6 is PE-HD Regranulat 200-S marketed by Vogt-plastic GmbH. PCR-PE6 has a Charpy impact strength (notched) +23 °C of 22 kJ/m$^2$ as determined according to ISO 179. PCR-PE8 is a recycled PE HD, marketed by QCP Polymers under the tradename: QCP - EXPE851B-0100.

Table 3c: characterization of suitable components C3: polyolefin post-consumer resins (PCR-PO)

| PCR-PO | waste | wt% rPE | wt% rPP | MI2 (g/10 min) | Charpy impact strength (notched) +23 °C (kJ/m$^2$) | Density (g/cm$^3$) |
|---|---|---|---|---|---|---|
| PCR-PO1 | Domestic waste | 82 | 18 | 2.5 | 15 | 0.95 |
| PCR-PO2 | Domestic waste | 72 | 28 | 3.0 | 8.4 | 0.95 |

The MI2 of the polyolefin post-consumer resins is determined at 230 °C under a load of 2.16 kg.

PCR-PO1 is PO Regranulat 920-L marketed by Vogt-plastic GmbH.

PCR-PO2 is PO Regranulat 920-H marketed by Vogt-plastic GmbH.

**Example 2 - The compositions**

Different compositions were prepared by melt-blending.

The blends were compounded on a twin-screw extruder corotating Coperion® ZSK 26 Mc[18], in following conditions:

- screw diameter: 25 mm
- screw length/diameter ratio = 40
- imposed temperature profile along the screw (in °C): 200-220 °C (this last temperature is the one imposed at the die)
- screw speed: 250 rpm
- output: 30 kg/h

The blends rheological measurements were performed at 230 °C.

The technical data of the twin-screw extruder corotating Coperion® ZSK 26 Mc[18] are:

- maximal torque per shaft: 140 Nm
- specific torque: 15 Nm/cm$^3$
- maximal screw speed: 1200 min$^{-1}$
- motor power: 37 kW

The characteristics of the polypropylene-based compositions (i.e. the blends) are given in table 4.

Table 4: characterization of the polypropylene-based compositions - inventive samples

| Tests | | E1 | E2 | E3 |
|---|---|---|---|---|
| **Comp position of the blend** | | | | |
| PCR-PP (Comp A) | | PCR-PP5 | PCR-PP6 | PCR-PP7 |
| wt% PCR-PP (Comp A) | | 50 | 67 | 70 |
| PP (comp B) | | PPC2 | PPH | PPC1 |
| wt% PP (comp B) | | 50 | 33 | 30 |
| MI2 PP (g/10 min) | | 0.3 | 0.3 | 0.3 |
| **Properties of the b lend** | | | | |
| Total content of PE (wt%) | | 5 | 6.7 | 7 |
| Total content of PCR (wt%) | | 50 | 67 | 70 |
| MI2 | g/10 min | 1.9 | 3.2 | 3.6 |
| Flexural modulus measured | MPa | 1350 | 1460 | 1306 |
| Flexural modulus calculated | MPa | 1225 | 1232 | 1280 |
| Charpy impact strength (notched) + 23 °C | kJ/m$^2$ | 19 | 8 | 7.5 |

(continued)

| Properties of the b lend | | | | |
|---|---|---|---|---|
| Charpy impact strength (notched) -20 °C | kJ/m$^2$ | 5.8 | n.d. | n.d. |
| n.d. = not determined | | | | |

The calculated flexural modulus is the flexural modulus that was expected in theory from the different components and their respective content, it is calculated as follows:

$$\text{Flex Mod calc} = +wt\%(\text{talc}) \times 40 + \Sigma\, wt\%(\text{Comp i}) \times \text{Flex Mod (Comp i)}$$

wherein comp i refers to the polymers within the composition.

For example, in E1, that comprises Component A and B, the flexural modulus expected is calculated as follows:

$$\text{Flex Mod calc} = wt\%(\text{Comp A}) \times \text{Flex Mod (Comp A)} + wt\%(\text{Comp B}) \times \text{Flex Mod (Comp B)}$$

$$\text{Flex Mod calc} = (0.5 \times 1100) + (0.5 \times 1350) = 1225 \text{ MPa}$$

For PCR-PP7, the flexural modulus used in the calculation was 1100 MPa.

From the results, it can be seen that there is a synergetic effect between component B and component A resulting in an increase of the flexural modulus as measured compared to the calculated flexural modulus (thus the flexural modulus expected). Without being bound by a theory, it is believed that the low MI2 of component B (i.e. the virgin polypropylene) allows it to act as a compatibilizer. This effect is demonstrated, in this table, for compositions comprising heterophasic propylene copolymer as well as for compositions comprising propylene homopolymer.

## Example 3 - Compositions with additional polyethylene (component C)

Different compositions were prepared by melt-blending in the same conditions as in example 2 but including additional polyethylene.

The characteristics of the polypropylene-based compositions (i.e. the blends) are given in table 5.

Table 5: characterization of the polypropylene-based compositions - inventive samples

| Tests | | E4 | E5 |
|---|---|---|---|
| **Composition of the blend** | | | |
| PCR-PP (Comp A) | | PCR-PP5 | PCR-PP5 |
| wt% PCR-PP (Comp A) | | 50 | 50 |
| PP (comp B) | | PPC2 | PPC2 |
| wt% PP (comp B) | | 40 | 30 |
| MI2 PP (g/10 min) | | 0.3 | 0.3 |
| PE (Comp C1) | | PE1 | PE1 |
| wt% PE (Comp C1) | | 10 | 20 |
| **Properties of the blend** | | | |
| Total content of PE (wt%) | | 15.0 | 25 |
| Total content of PCR (wt%) | | 50 | 50 |
| MI2 | g/10 min | 2.1 | 2.4 |
| Flexural modulus measured | MPa | 1264 | 1214 |
| Flexural modulus calculated | MPa | 1210 | 1195 |

(continued)

| Properties of the blend | | | |
|---|---|---|---|
| Charpy impact strength (notched) + 23 °C | kJ/m$^2$ | 24 | 44 |
| Charpy impact strength (notched) -20 °C | kJ/m$^2$ | n.d. | n.d. |
| nd = not determined | | | |

The results show an improvement of the impact properties when the polyethylene content increases. Surprisingly, an improved balance of stiffness and impact properties is achieved.

The calculated flexural modulus is the flexural modulus that was expected in theory from the different components and their respective content, it is calculated as follows:

$$\text{Flex Mod calc} = +wt\%(\text{talc}) \times 40 + \Sigma \ wt\%(\text{Comp i}) \times \text{Flex Mod (Comp i)}$$

wherein comp i refers to the polymers within the composition.

For example, in E4, that comprises Component A, B and C, the flexural modulus expected is calculated as follows:

$$\text{Flex Mod calc} = wt\%(\text{Comp A}) \times \text{Flex Mod (Comp A)} + wt\%(\text{Comp B}) \times \text{Flex Mod (Comp B)} +$$
$$wt\%(\text{Comp C}) \times \text{Flex Mod (Comp C)}$$

Flex Mod calc = (0.5 x1100) + (0.4 x 1350) + (0.1 x1200) = 1210 MPa

## Example 4 - Compositions with elastomer (component D)

Different compositions were prepared by melt-blending in the same conditions as in example 2 but including rubber.

The characteristics of the polypropylene-based compositions (i.e. the blends) are given in table 6.

Table 6: characterization of the polypropylene-based compositions

| Tests | E6 | E7 | E8 | E9 | |
|---|---|---|---|---|---|
| **Composition of the blend** | | | | | |
| PCR-PP (Comp A) | PCR-PP6 | PCR-PP6 | PCR-PP7 | PCR-PP7 | |
| wt% PCR-PP (Comp A) | 50 | 60 | 60 | 60 | |
| PP (comp B) | PPC2 | PPC2 | PPC1 | PPC1 | |
| wt% PP (comp B) | 30 | 30 | 15 | 15 | |
| MI2 PP (g/10 min) | 0.3 | 0.3 | 0.3 | 0.3 | |
| elastomer (Comp D) | TAFMER A0550S | TAFMER A0550S | Engage 7467 | Engage 7467 | |
| wt% elastomer (Comp D) | 20 | 10 | 10 | 10 | |
| talc (Comp E) | - | - | Finntalc M15 | Finntalc M15 | |
| wt% talc (Comp E) | - | - | 15 | 15 | |
| Additional component | - | - | - | peroxide | |
| **Properties of the blend** | | | | | |
| Total content of PE (wt%) | 5.0 | 6.0 | 6.0 | 6.0 | |
| Total content of PCR (wt%) | | 50 | 60 | 60 | 60 |

(continued)

| Properties of the blend | | | | | |
|---|---|---|---|---|---|
| MI2 | g/10 min | 1.7 | 2.0 | 4 | 7.8 |
| Flexural modulus measured | MPa | 870 | 1050 | 1590 | 1557 |
| Flexural modulus calculated | MPa | 965 | 1070 | 1520 | 1520 |
| Charpy impact strength (notched) + 23 °C | kJ/m² | 60.1 | 50.5 | 7.5 | 7.4 |
| Charpy impact strength (notched) -20 °C | kJ/m² | 29.8 | 5.9 | 3.3 | 3.3 |

In E6 the improvement in flexural modulus is not achieved, this might be due to a content of rubber being too high. In E7 the measured flexural modulus is similar to the calculated one. It is believed that the rubber content is too high in the composition. However, as demonstrated in E8 and E9, a content of up to 10 wt% of elastomers can be used if compensated by an amount of talc higher than 5 wt%, preferably higher than 8 wt% more preferably higher than 10 wt%.

The calculated flexural modulus is the flexural modulus that was expected in theory from the different components and their respective content, it is calculated as follows:

$$\text{Flex Mod calc} = +\text{wt\%(talc)} \times 40 + \sum \text{wt\%(Comp i)} \times \text{Flex Mod (Comp i)}$$

wherein comp i refers to the polymers within the composition.

For example, in E6, that comprises Component A, B and D, the flexural modulus expected is calculated as follows:

$$\text{Flex Mod calc} = \text{wt\%(Comp A)} \times \text{Flex Mod (Comp A)} + \text{wt\%(Comp B)} \times \text{Flex Mod (Comp B)} + \text{wt\%(Comp D)} \times \text{Flex Mod (Comp D)}$$

wherein, for the elastomers, the flexural modulus used in the calculations are 50 MPa.

$$\text{Flex Mod calc} = (0.5 \times 1100) + (0.3 \times 1350) + (0.2 \times 50) = 965 \text{ MPa}$$

For example, in E8, that comprises Component A, B, D and E, the flexural modulus expected is calculated as follows:

$$\text{Flex Mod calc} = \text{wt\%(Comp A)} \times \text{Flex Mod (Comp A)} + \text{wt\%(Comp B)} \times \text{Flex Mod (Comp B)} + \text{wt\%(Comp D)} \times \text{Flex Mod (Comp D)} + \text{wt\%(Comp E)} \times 40$$

wherein for the elastomers, the flexural modulus used in the calculations are 50 MPa.

$$\text{Flex Mod calc} = (0.6 \times 1100) + (0.15 \times 1700) + (0.1 \times 50) + (15 \times 40) = 1520 \text{ MPa}$$

For standard talc, the increase of the flexural modulus generated by the presence of talc has been estimated to be about 40 MPa per percent of talc added in the composition. In the context of the invention, a standard talc is a talc having a particle size distribution with a median particle size (d50) equal or higher than 1.0 μm as determined according to ISO 13317-3 by Sedigraph.

In case a finer talc is used, i.e. with a particle size distribution with a median particle size (d50) lower than 1.0 μm, the increase of the flexural modulus generated by the presence of talc will be higher. In the context of the invention, in such a case an increase of from 80 to 100 MPa per percent of talc added in the composition is to be considered.

**Example 5 - Compositions with talc (component E)**

Different compositions were prepared by melt-blending in the same conditions as in example 2 but including talc.

The characteristics of the polypropylene-based compositions (i.e. the blends) are given in table 7.

Table 7: characterization of the polypropylene-based compositions

| Tests | | E10 | E11 |
|---|---|---|---|
| **Composition of the blend** | | | |
| PCR-PP (Comp A) | | PCR-PP6 | PCR-PP5 |
| wt% PCR-PP (Comp A) | | 62 | 77 |
| PP (comp B) | | PPH | PPC2 |
| wt% PP (comp B) | | 35 | 15 |
| MI2 PP (g/10 min) | | 0.3 | 0.3 |
| talc (Comp E) | | HTP1c | HTP1c |
| wt% talc (Comp E) | | 3 | 8 |
| **Prop erties of the blend** | | | |
| Total content of PE (wt%) | | 6.2 | 7.7 |
| Total content of PCR (wt%) | | 62 | 77 |
| MI2 | g/10 min | 2.8 | 6.7 |
| Flexural modulus measured | MPa | 1580 | 1640 |
| Flexural modulus calculated | MPa | 1327 | 1370 |
| Charpy impact strength (notched) + 23 °C | kJ/m$^2$ | 8 | 8.2 |
| Charpy impact strength (notched) -20 °C | kJ/m$^2$ | n.d. | n.d. |
| n.d. = not determined | | | |

The presence of talc further increases the flexural modulus in the inventive compositions.

HTP1c is a talc having a median particle size (d50) of 1.5 $\mu$m.

**Example 6 - Compositions with additional polyethylene (component C), elastomer (component D) and talc (component E)**

Different compositions were prepared by melt-blending in the same conditions as in example 2 but including polyethylene, elastomer and talc.

The characteristics of the polypropylene-based compositions (i.e. the blends) are given in table 8.

Table 8: characterization of the polypropylene-based compositions

| Tests | E12 | E13 | E14 | E15 |
|---|---|---|---|---|
| **Composition of the blend** | | | | |
| PCR-PP (Comp A) | PCR-PP6 | PCR-PP6 | PCR-PP6 | PCR-PP6 |
| wt% PCR-PP (Comp A) | 41 | 21 | 43 | 39 |
| PP (comp B) | PPC2 | PPC2 | PPC2 | PPC2 |
| wt% PP (comp B) | 28 | 25 | 25 | 30 |
| MI2 PP (g/10 min) | 0.3 | 0.3 | 0.3 | 0.3 |
| PE (Comp C) | PCR-PE6 (C2) | PCR-PO2 (C3) | PCR-PE6 (C2) | PCR-PE8 (C2) |

(continued)

| Composition of the blend | | | | |
|---|---|---|---|---|
| wt% PE (Comp C) | 20 | 40 | 21 | 20 |
| elastomer (Comp D) | Engage 8100 | Engage 7467 | Engage 8100 | Lucen 168 |
| wt% elastomer (Comp D) | 7 | 7 | 7 | 7 |
| talc (Comp E) | Mistron 75-7A | HTP1c | Mistron 75-7A | Finntalc MO5SL |
| wt% talc (Comp E) | 4 | 7 | 4 | 4 |
| Properties of the blend | | | | |
| Total content of PE (wt%) | 23.5 | 30.1 | 24.67 | 23.3 |
| Total content of PCR (wt%) | 61 | 61 | 64 | 59 |
| MI2 | g/10 min | 1.4 | 1.6 | 1.9 | 1.9 |
| Flexural modulus measured | MPa | 1200 | 1015 | 1180 | 1184 |
| Flexural modulus calculated | MPa | 1183 | 1152 | 1174 | 1174 |
| Charpy impact strength (notched) + 23 °C | kJ/m$^2$ | 49 | 40 | 44 | 54.7 |
| Charpy impact strength (notched) -20 °C | kJ/m$^2$ | 5.6 | 6.8 | 5.6 | 5.2 |

Mistron 75-7A has a median diameter of 4.9 $\mu$m.

Table 8: characterization of the polypropylene-based compositions (continued)

| Tests | E16 | E17 | E18 |
|---|---|---|---|
| Composition of the blend | | | |
| PCR-PP (Comp A) | PCR-PP6 | PCR-PP6 | PCR-PP6 |
| wt% PCR-PP (Comp A) | 28 | 40 | 53 |
| PP (comp B) | PPC2 | PPC2 | PPC2 |
| wt% PP (comp B) | 24 | 36 | 25 |
| MI2 PP (g/10 min) | 0.3 | 0.3 | 0.3 |
| PE (Comp C) | PCR-PO2 (C3) | PCR-PE8 (C2) | PCR-PE8 (C2) |
| wt% PE (Comp C) | 33 | 10 | 10 |
| elastomer (Comp D) | Engage 7467 | Lucen 168 | Lucen 168 |
| wt% elastomer (Comp D) | 8 | 10 | 7 |
| talc (Comp E) | HTP1c | Finntalc MO5SL | Finntalc MO5SL |
| wt% talc (Comp E) | 7 | 4 | 5 |
| Properties of the blend | | | |
| Total content of PE (wt%) | 25.9 | 13.7 | 15 |
| Total content of PCR (wt%) | 61 | 50 | 63 |
| MI2 | g/10 min | 2.0 | 2.1 | 3.3 |
| Flexural modulus measured | MPa | 1000 | 1146 | 1311 |
| Flexural modulus calculated | MPa | 1164 | 1179 | 1212 |

(continued)

| Properties of the blend | | | | |
|---|---|---|---|---|
| Charpy impact strength (notched) + 23 °C | kJ/m$^2$ | 44 | 59.4 | 34 |
| Charpy impact strength (notched) -20 °C | kJ/m$^2$ | 6.2 | 5.3 | 4.7 |

In all samples, the total content of post-consumer resin (PCR$_T$) is at least 50 wt% of the composition. In E13 and E16, however, the content of component A is believed to be too low to achieve an increase of the flexural modulus. In E17, as in E6 and E7, the content of rubber is too high and affects the mechanical properties of the composition.

It can be seen that the addition of component C (polyethylene resin) allows the achievement of an improved balance of stiffness and impact properties, with a flexural modulus of at least 950 MPa as determined according to ISO 178, together with an Izod impact strength (notched) at 23 °C of at least 20 kJ/m$^2$ as determined according to ISO 180. In addition, the composition comprising component C shows an Izod impact strength (notched) at -20 °C of at least 3.0 kJ/m$^2$ as determined according to ISO 180.

**Claims**

1. Process to produce a polypropylene-based composition comprising post-consumer resin (PCR) **characterised in that** it comprises the steps of:

    - providing a component A being a polypropylene post-consumer resin (PCR-PP) having an MI2 ranging from 7 to 70 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A;
    - providing a component B being a polypropylene resin having an MI2 ranging from 0.1 to 10.0 g/10 min as determined according to ISO 1133 conditions M, at a temperature of 230 °C and under a load of 2.16 kg; and
    - melt-blending the components to form a polypropylene-based composition wherein the content of component A in the polypropylene-based composition is ranging from 35 to 80 wt% as based on the total weight of the polypropylene-based composition.

2. The process according to claim 1, **characterised in that**, before the step of melt-blending the components to form a polypropylene-based composition, the process further comprises one or more steps selected from:

    - providing a component C being a polyethylene resin having an MI2 ranging from 0.1 to 5.0 g/10 min as determined according to ISO 1133 conditions D, at a temperature of 190 °C and under a load of 2.16 kg;
    - providing a component D being one or more elastomers; and
    - providing a component E being one or more fillers.

3. Process according to claim 1 or 2, **characterized in that** component A has an MI2 of at least 8 g/10 min as determined according to ISO 1133 conditions M, at a temperature of 230 °C and under a load of 2.16 kg, and/or an MI2 of at most 20 g/10 min as determined according to ISO 1133 conditions M, at a temperature of 230 °C and under a load of 2.16 kg.

4. Process according to any one of claims 1 to 3, **characterised in that** the component B:

    - has an MI2 of at most 5.0 g/10 min as determined according to ISO 1133 conditions M, at a temperature of 230 °C and under a load of 2.16 kg , preferably less than 1.0 g/10 min; and/or
    - is selected from a polypropylene homopolymer resin, a random propylene copolymer resin, a heterophasic propylene copolymer resin, and any mixture thereof; with preference, the component B is a heterophasic propylene copolymer resin.

5. Process according to any one of claims 1 to 4, **characterised in that** component C is one or more selected from:

    C1) a virgin polyethylene resin (PE); and/or
    C2) a polyethylene post-consumer resin (PCR-PE); and/or

C3) a polyolefin post-consumer resin (PCR-PO) comprising at least 30 wt% of polyethylene based on the total weight of the polyolefin post-consumer resin;

with preference, the component C comprises a polyethylene post-consumer resin (PCR-PE) and/or a polyolefin post-consumer resin (PCR-PO), so that the total content post-consumer resin ($PCR_T$) in the polypropylene-based composition is ranging from 50 to 80 wt% as based on the total weight of the polypropylene-based composition, wherein the total content post-consumer resin ($PCR_T$) in the polypropylene-based composition is the sum of the content of component A (PCR-PP) and of the recycled material in component C selected from polyethylene post-consumer resin (PCR-PE) and/or polyolefin post-consumer resin (PCR-PO).

6. Process according to any one of claims 1 to 5, **characterised in that** the polypropylene-based composition:

- comprises a total polyethylene content ranging from 5 to 25 wt%, as based on the total weight of the polypropylene-based composition, preferably from 5 to 15 wt% ; and/or
- comprises an acetone insolubles content ranging from 1.0 to 20 wt% as based on the total weight of the polypropylene-based composition, preferably from 1.0 to 15 wt%, and/or
- has an MI2 ranging from 1.0 to 8.0 g/10 min as determined according to ISO 1133 conditions M, at a temperature of 230 °C and under a load of 2.16 kg.

7. Process according to any one of claims 1 to 6, **characterised in that** component C is polyethylene resin having:

- a density of at least 0.940 g/cm$^3$ as determined according to ISO 1183 at 23 °C, preferably of at least 0.950 g/cm$^3$, and/or
- an MI2 ranging from 0.2 to 2.5 g/10 min as determined according to ISO 1133 conditions D, at a temperature of 190 °C and under a load of 2.16 kg, preferably 0.5 to 1.0 g/10 min.

8. Process according to any one of claims 1 to 7, **characterised in that**:

- the content of component B is ranging from 10 to 60 wt% as based on the total weight of the polypropylene-based composition; and/or
- the content of component C is ranging from 5 to 25 wt% as based on the total weight of the polypropylene-based composition; and/or
- the content of component D is ranging from 0 to 10.0 wt% as based on the total weight of the polypropylene-based composition; and/or
- the content of component E is ranging from 0 to 20.0 wt% as based on the total weight of the polypropylene-based composition.

9. Process according to any one of claims 1 to 8, **characterised in that** the process further comprises the step of providing a component D being one or more elastomers, and **in that** the step of melt-blending the components to form a polypropylene-based composition comprises melt-blending the component D with the other components to form the polypropylene-based composition, with preference, the component D being one or more elastomers:

- is selected from elastomeric copolymers of ethylene with 1-octene, elastomeric copolymers of ethylene with 1-butene; elastomeric copolymers of ethylene with propene, and any mixture thereof; and/orfrom SIS (Styrene isoprene styrene block copolymers), SEPS (Hydrogenated Styrene isoprene styrene block copolymers), SBS (Styrene butadiene styrene block copolymers), SEBS (Hydrogenated styrenic butadiene copolymers), SBSS (Styrene butadiene styrene styrene block copolymers), and any mixture thereof; and/or
- has an MI2 ranging from 0.5 to 5.0 g/10 min as determined according to ISO 1133 conditions D, at a temperature of 190 °C and under a load of 2.16 kg.

10. Process according to claim 9, **characterised in that** the polypropylene-based composition comprises from 0.1 to 10 wt% of component D as based on the total weight of the polypropylene-based composition, wherein component D is one or more elastomers.

11. Process according to any one of claims 1 to 10, **characterised in that** the process further comprises the step of providing a component E being one or more fillers and **in that** the step of melt-blending the components to form a polypropylene-based comprises melt-blending the component E with the other components to form the polypropylene-based composition, with preference:

- the polypropylene-based composition comprises from 0.1 to 15 wt% of component E as based on the total weight of the polypropylene-based composition; and/or
- the component E is one or more talc mineral fillers.

12. Process according to any one of claim 9 to 11, **characterized in that** the process further comprises the step of providing a component D being one or more elastomers, and the step of providing a component E being one or more fillers; and **in that** the step of melt-blending the components to form a polypropylene-based composition comprises melt-blending the component D and the component E with the other components to form the polypropylene-based composition;

with preference the polypropylene-based composition comprises from 0.1 to 10 wt% of component D as based on the total weight of the polypropylene-based composition, wherein component D is one or more elastomers and/or the polypropylene-based composition comprises from 0.1 to 15 wt% of component E as based on the total weight of the polypropylene-based composition.

13. Polypropylene-based composition produced by a process according to any one of claims 1 to 12.

14. Polypropylene-based composition **characterised in that** it comprises from 35 to 80 wt% of a component A being a polypropylene post-consumer resin (PCR-PP) as based on the total weight of the polypropylene-based composition, the component A being a polypropylene post-consumer resin having an MI2 ranging from 7 to 70 g/10 min as determined according to ISO 1133 conditions M, at a temperature of 230 °C and under a load of 2.16 kg, wherein component A is a blend of recycled polypropylene and recycled polyethylene, wherein the content of the recycled polyethylene is ranging from 3 to 20 wt% relative to the total weight of component A;

and **in that** the polypropylene-based composition has:

- an MI2 ranging from 1.0 to 8.0 g/10 min as determined according to ISO 1133 conditions M, at a temperature of 230 °C and under a load of 2.16 kg;
- an acetone insolubles content ranging from 1.0 to 15 wt% as based on the total weight of the polypropylene-based composition; and
- a total polyethylene content ranging from 5 to 25 wt%, as based on the total weight of the polypropylene-based composition, preferably from 5 to 15 wt%;

with preference, the polypropylene-based composition is produced by a process according to any one of claims 1 to 12.

15. Use of the polypropylene-based composition obtained by the process according to any one of claims 1 to 12 to make an article in a process selected from extrusion, blow-moulding, injection, injection blow moulding, injection stretch blow moulding, rotomoulding, extrusion and thermoforming.

16. Article produced from the polypropylene-based composition obtained by the process according to any one of claims 1 to 12, or produced from a blend comprising the polypropylene-based composition obtained by the process according to any one of claims 1 to 12; with preference, the article is selected from pipes, corrugated pipes, sheets, corrugated sheets, boxes, pails, bottles, jerrycans, containers, caps and closures, appliances, trays, luggage, automobile parts, bumpers, dashboards, battery cases, and interior trim panels.

**Patentansprüche**

1. Verfahren zur Herstellung einer polypropylenbasierten Zusammensetzung, die ein recyceltes Harz (post-consumer resin, PCR) umfasst, **dadurch gekennzeichnet, dass** es folgende Schritte umfasst:

- Bereitstellen einer Komponente A, die ein wiederverwertetes Polypropylenharz (PCR-PP) ist, das einen MI2 im Bereich von 7 bis 70 g/10 min aufweist, der nach ISO-1133-Bedingungen M bei einer Temperatur von 230 °C und unter einer Last von 2,16 kg bestimmt wurde, wobei Komponente A eine Mischung von recyceltem Polypropylen und recyceltem Polyethylen ist, wobei der Gehalt an dem recycelten Polyethylen im Bereich von 3 bis 20 Gew.-% liegt, relativ zu dem Gesamtgewicht von Komponente A;
- Bereitstellen einer Komponente B, die ein Polypropylenharz ist, das einen MI2 im Bereich von 0,1 bis 10,0 g/10 min aufweist, der nach ISO-1133-Bedingungen M bei einer Temperatur von 230 °C und unter einer Last von 2,16 kg bestimmt wurde; und

- Schmelzmischen der Komponenten, um eine polypropylenbasierte Zusammensetzung zu bilden, wobei der Gehalt an Komponente A in der polypropylenbasierten Zusammensetzung im Bereich von 35 bis 80 Gew.-% liegt, bezogen auf das Gesamtgewicht der polypropylenbasierten Zusammensetzung.

2. Verfahren nach Anspruch 1, **dadurch gekennzeichnet, dass** das Verfahren vor dem Schritt des Schmelzmischens der Komponenten zum Bilden einer polypropylenbasierten Zusammensetzung ferner einen oder mehrere Schritte umfasst, ausgewählt aus:

- Bereitstellen einer Komponente C, die ein Polyethylenharz ist, das einen MI2 im Bereich von 0,1 bis 5,0 g/10 min aufweist, der nach ISO-1133-Bedingungen D bei einer Temperatur von 190 °C und unter einer Last von 2,16 kg bestimmt wurde;
- Bereitstellen einer Komponente D, die ein oder mehrere Elastomere ist; und
- Bereitstellen einer Komponente E, die ein oder mehrere Füllstoffe ist.

3. Verfahren nach Anspruch 1 oder 2, **dadurch gekennzeichnet, dass** Komponente A einen MI2 von mindestens 8 g/10 min aufweist, der nach ISO-1133-Bedingungen M bei einer Temperatur von 230 °C und unter einer Last von 2,16 kg bestimmt wurde, und/oder einen MI2 von höchstens 20 g/10 min aufweist, der nach ISO-1133-Bedingungen M bei einer Temperatur von 230 °C und unter einer Last von 2,16 kg bestimmt wurde.

4. Verfahren nach einem der Ansprüche 1 bis 3, **dadurch gekennzeichnet, dass** die Komponente B:

- einen MI2 von höchstens 5,0 g/10 min aufweist, der nach ISO-1133-Bedingungen M bei einer Temperatur von 230 °C und unter einer Last von 2,16 kg, vorzugsweise weniger als 1,0 g/10 min bestimmt wurde; und/oder
- ausgewählt ist aus einem Polypropylen-Homopolymerharz, einem statistischen Propylen-Copolymerharz, einem heterophasischen Propylen-Copolymerharz und jeder Mischung davon; wobei die Komponente B vorzugsweise ein heterophasiges Propylen-Copolymerharz ist.

5. Verfahren nach einem der Ansprüche 1 bis 4, **dadurch gekennzeichnet, dass** Komponente C eine oder mehrere ist, ausgewählt aus:

C1) einem reinen Polyethylenharz (PE); und/oder
C2) einem wiederverwerteten Polyethylenharz (PCR-PE); und/oder C3) einem wiederverwerteten Polyolefinharz (PCR-PO), das mindestens 30 Gew.-% umfasst von Polyethylen, bezogen auf das Gesamtgewicht des wiederverwerteten Polyolefinharzes;

wobei die Komponente C vorzugsweise ein wiederverwertetes Polyethylenharz (PCR-PE) und/oder ein wiederverwertetes Polyolefinharz (PCR-PO) umfasst, sodass der Gesamtgehalt an wiederverwertetem Harz $(PCR_T)$ in der polypropylenbasierten Zusammensetzung im Bereich von 50 bis 80 Gew.-% liegt, bezogen auf das Gesamtgewicht der polypropylenbasierten Zusammensetzung, wobei der Gesamtgehalt an wiederverwertetem Harz $(PCR_T)$ in der polypropylenbasierten Zusammensetzung die Summe des Gehalts an Komponente A (PCR-PP) und des recycelten Materials in Komponente C ist, ausgewählt aus wiederverwertetem Polyethylenharz (PCR-PE) und/oder wiederverwertetem Polyolefinharz (PCR-PO).

6. Verfahren nach einem der Ansprüche 1 bis 5, **dadurch gekennzeichnet, dass** die polypropylenbasierte Zusammensetzung:

- einen Gesamtpolyethylengehalt im Bereich von 5 bis 25 Gew.-%, bezogen auf das Gesamtgewicht der polypropylenbasierten Zusammensetzung, vorzugsweise von 5 bis 15 Gew.-% umfasst; und/oder
- einen Gehalt an acetonunlöslichen Stoffen im Bereich von 1,0 bis 20 Gew.-%, bezogen auf das Gesamtgewicht der polypropylenbasierten Zusammensetzung, vorzugsweise von 1,0 bis 15 Gew.-% umfasst, und/oder
- einen MI2 im Bereich von 1,0 bis 8,0 g/10 min aufweist, der nach ISO-1133-Bedingungen M bei einer Temperatur von 230 °C und unter einer Last von 2,16 kg bestimmt wurde.

7. Verfahren nach einem der Ansprüche 1 bis 6, **dadurch gekennzeichnet, dass** Komponente C Polyethylenharz ist, das aufweist:

- eine Dichte von mindestens 0,940 $g/cm^3$, die nach ISO 1183 bei einer Temperatur von 23 °C bestimmt wurde, vorzugsweise von mindestens 0,950 g/cm$^3$, und/oder

- einen MI2 im Bereich von 0,2 bis 2,5 g/10 min, der nach ISO-1133-Bedingungen D bei einer Temperatur von 190 °C und unter einer Last von 2,16 kg, vorzugsweise 0,5 bis 1,0 g/10 min bestimmt wurde.

8. Verfahren nach einem der Ansprüche 1 bis 7, **dadurch gekennzeichnet, dass**:

- der Gehalt an Komponente B im Bereich von 10 bis 60 Gew.-% liegt, bezogen auf das Gesamtgewicht der polypropylenbasierten Zusammensetzung; und/oder
- der Gehalt an Komponente C im Bereich von 5 bis 25 Gew.-% liegt, bezogen auf das Gesamtgewicht der polypropylenbasierten Zusammensetzung; und/oder
- der Gehalt an Komponente D im Bereich von 0 bis 10,0 Gew.-% liegt, bezogen auf das Gesamtgewicht der polypropylenbasierten Zusammensetzung; und/oder
- der Gehalt an Komponente E im Bereich von 0 bis 20,0 Gew.-% liegt, bezogen auf das Gesamtgewicht der polypropylenbasierten Zusammensetzung.

9. Verfahren nach einem der Ansprüche 1 bis 8, **dadurch gekennzeichnet, dass** das Verfahren ferner den Schritt des Bereitstellens einer Komponente D umfasst, die ein oder mehrere Elastomere ist, und dass der Schritt des Schmelzmischens der Komponenten zum Bilden einer polypropylenbasierten Zusammensetzung Schmelzmischen der Komponente D mit den anderen Komponenten umfasst, um die polypropylenbasierte Zusammensetzung zu bilden, wobei die Komponente D vorzugsweise ein oder mehrere Elastomere ist:

- ausgewählt ist aus elastomeren Copolymeren von Ethylen mit 1-Octen, elastomeren Copolymeren von Ethylen mit 1-Buten; elastomeren Copolymeren von Ethylen mit Propen und jeder Mischung davon; und/oder aus SIS (Styrol-Isopren-Styrol-Blockcopolymere), SEPS (hydrierte Styrol-Isopren-Styrol-Blockcopolymere), SBS (Styrol-Butadien-Styrol-Blockcopolymere), SEBS (hydrierte Styrol-Butadien-Copolymere), SBSS (Styrol-Butadien-Styrol-Styrol-Blockcopolymere) und jeder Mischung davon; und/oder
- einen MI2 im Bereich von 0,5 bis 5,0 g/10 min aufweist, der nach ISO-1133-Bedingungen D bei einer Temperatur von 190 °C und unter einer Last von 2,16 kg bestimmt wurde.

10. Verfahren nach Anspruch 9, **dadurch gekennzeichnet, dass** die polypropylenbasierte Zusammensetzung 0,1 bis 10 Gew.-% von Komponente D, bezogen auf das Gesamtgewicht der polypropylenbasierten Zusammensetzung, umfasst, wobei Komponente D ein oder mehrere Elastomere ist.

11. Verfahren nach einem der Ansprüche 1 bis 10, **dadurch gekennzeichnet, dass** das Verfahren ferner den Schritt des Bereitstellens einer Komponente E umfasst, die ein oder mehrere Füllstoffe ist, und dass der Schritt des Schmelzmischens der Komponenten zum Bilden einer polypropylenbasierten Zusammensetzung Schmelzmischen der Komponente E mit den anderen Komponenten umfasst, um die polypropylenbasierte Zusammensetzung zu bilden, wobei vorzugsweise:

- die polypropylenbasierte Zusammensetzung 0,1 bis 15 Gew.-% von Komponente E umfasst, bezogen auf das Gesamtgewicht der polypropylenbasierten Zusammensetzung; und/oder
- die Komponente E ein oder mehrere Talkummineralfüllstoffe ist.

12. Verfahren nach einem der Ansprüche 9 bis 11, **dadurch gekennzeichnet, dass** das Verfahren ferner den Schritt des Bereitstellens einer Komponente D umfasst, die ein oder mehrere Elastomere ist, und den Schritt des Bereitstellens einer Komponente E, die ein oder mehrere Füllstoffe ist; und dass der Schritt des Schmelzmischens der Komponenten zum Bilden einer polypropylenbasierten Zusammensetzung das Schmelzmischen der Komponente D und der Komponente E mit den anderen Komponenten umfasst, um die polypropylenbasierte Zusammensetzung zu bilden;

wobei vorzugsweise die polypropylenbasierte Zusammensetzung 0,1 bis 10 Gew.-% von Komponente D umfasst, bezogen auf das Gesamtgewicht der polypropylenbasierten Zusammensetzung, wobei Komponente D ein oder mehrere Elastomere ist, und/oder die polypropylenbasierte Zusammensetzung 0,1 bis 15 Gew.-% von Komponente E umfasst, bezogen auf das Gesamtgewicht der polypropylenbasierten Zusammensetzung.

13. Polypropylenbasierte Zusammensetzung, die durch ein Verfahren nach einem der Ansprüche 1 bis 12 hergestellt wird.

14. Polypropylenbasierte Zusammensetzung, **dadurch gekennzeichnet, dass** sie 35 bis 80 Gew. % einer Komponente

**EP 3 802 689 B1**

A, die ein wiederverwertetes Polypropyleharz (PCR-PP) ist, bezogen auf das Gesamtgewicht der polypropylenbasierten Zusammensetzung umfasst, wobei die Komponente A ein wiederverwertetes Polypropylenharz ist, das einen MI2 im Bereich von 7 bis 70 g/10 min aufweist, der nach ISO-1133-Bedingungen M bei einer Temperatur von 230 °C und unter einer Last von 2,16 kg bestimmt wurde, wobei Komponente A eine Mischung von recyceltem Polypropylen und recyceltem Polyethylen ist, wobei der Gehalt an dem recycelten Polyethylen im Bereich von 3 bis 20 Gew.-% liegt, relativ zu dem Gesamtgewicht von Komponente A;

und dass die polypropylenbasierte Zusammensetzung aufweist:

- einen MI2 im Bereich von 1,0 bis 8,0 g/10 min, der nach ISO-1133-Bedingungen M bei einer Temperatur von 230 °C und unter einer Last von 2,16 kg bestimmt wurde;
- einen Gehalt an acetonunlöslichen Stoffen im Bereich von 1,0 bis 15 Gew.-%, bezogen auf das Gesamtgewicht der polypropylenbasierten Zusammensetzung; und
- einen Gesamtpolyethylengehalt im Bereich von 5 bis 25 Gew.-%, bezogen auf das Gesamtgewicht der polypropylenbasierten Zusammensetzung, vorzugsweise von 5 bis 15 Gew.-%;

wobei die polypropylenbasierte Zusammensetzung vorzugsweise durch ein Verfahren nach einem der Ansprüche 1 bis 12 hergestellt wird.

15. Verwendung der durch das Verfahren nach einem der Ansprüche 1 bis 12 erhaltenen polypropylenbasierten Zusammensetzung zur Herstellung eines Artikels in einem Verfahren, ausgewählt aus Extrusion, Blasformen, Spritzgießen, Spritzblasformen, Spritzstreckblasformen, Rotationsformen, Extrusion und Thermoformen.

16. Artikel, hergestellt aus der polypropylenbasierten Zusammensetzung, erhalten durch das Verfahren nach einem der Ansprüche 1 bis 12, oder hergestellt aus einer Mischung, umfassend die polypropylenbasierte Zusammensetzung, erhalten durch das Verfahren nach einem der Ansprüche 1 bis 12; wobei der Artikel vorzugsweise ausgewählt ist aus Rohren, Wellrohren, Blechen, Wellblechen, Schachteln, Eimern, Flaschen, Kanistern, Behältern, Kappen und Verschlüssen, Geräten, Tabletts, Gepäck, Autoteilen, Stoßfängern, Armaturenbrettern, Batteriekästen und Innenverkleidungsplatten.

## Revendications

1. Procédé pour produire une composition à base de polypropylène comprenant une résine post-consommation (PCR) **caractérisé en ce qu'**il comprend les étapes de :

- fourniture d'un constituant A qui est une résine de polypropylène post-consommation (PCR-PP) ayant un MI2 compris entre 7 et 70 g/10 min tel que déterminé conformément aux conditions M de la norme ISO 1133, à une température de 230°C et sous une charge de 2,16 kg, le constituant A étant un mélange de polypropylène recyclé et de polyéthylène recyclé, la teneur en polyéthylène recyclé étant comprise entre 3 et 20 % en poids par rapport au poids total du constituant A ;
- fourniture d'un constituant B qui est une résine de polypropylène ayant un MI2 compris entre 0,1 et 10,0 g/10 min tel que déterminé conformément aux conditions M de la norme ISO 1133, à une température de 230°C et sous une charge de 2,16 kg ; et
- mélange à l'état fondu des constituants pour former une composition à base de polypropylène, la teneur en constituant A dans la composition à base de polypropylène étant comprise entre 35 et 80 % en poids par rapport au poids total de la composition à base de polypropylène.

2. Procédé selon la revendication 1, **caractérisé en ce que**, avant l'étape de mélange à l'état fondu des constituants pour former une composition à base de polypropylène, le procédé comprend en outre une ou plusieurs étapes choisies parmi :

- la fourniture d'un constituant C qui est une résine de polyéthylène ayant un MI2 compris entre 0,1 et 5,0 g/10 min tel que déterminé conformément aux conditions D de la norme ISO 1133, à une température de 190°C et sous une charge de 2,16 kg ;
- la fourniture d'un constituant D qui est un ou plusieurs élastomères ; et
- la fourniture d'un constituant E qui est une ou plusieurs charges.

**3.** Procédé selon la revendication 1 ou 2, **caractérisé en ce que** le constituant A a un MI2 d'au moins 8 g/10 min tel que déterminé conformément aux conditions M de la norme ISO 1133, à une température de 230°C et sous une charge de 2,16 kg, et/ou un MI2 d'au plus 20 g/10 min tel que déterminé conformément aux conditions M de la norme ISO 1133, à une température de 230°C et sous une charge de 2,16 kg.

**4.** Procédé selon l'une quelconque des revendications 1 à 3, **caractérisé en ce que** le constituant B :

- a un MI2 d'au plus 5,0 g/10 min tel que déterminé conformément aux conditions M de la norme ISO 1133, à une température de 230°C et sous une charge de 2,16 kg, de préférence inférieure à 1,0 g/10 min ; et/ou
- est choisi parmi une résine homopolymère de polypropylène, une résine copolymère de propylène aléatoire, une résine de copolymère de propylène hétérophasique, et tout mélange de celles-ci ; de préférence, le constituant B est une résine copolymère de propylène hétérophasique.

**5.** Procédé selon l'une quelconque des revendications 1 à 4, **caractérisé en ce que** le constituant C est un ou plusieurs éléments choisis parmi :

C1) une résine de polyéthylène (PE) vierge ; et/ou
C2) une résine de polyéthylène post-consommation (PCR-PE) ; et/ou C3) une résine de polyoléfine post-consommation (PCR-PO) comprenant au moins 30 % en poids de polyéthylène sur la base du poids total de la résine de polyoléfine post-consommation ;

de préférence, le constituant C comprend une résine de polyéthylène post-consommation (PCR-PE) et/ou une résine de polyoléfine post-consommation (PCR-PO), de sorte que la teneur totale en résine post-consommation (PCR$_T$) dans la composition à base de polypropylène soit comprise entre 50 et 80 % en poids par rapport au poids total de la composition à base de polypropylène, la teneur totale en résine post-consommation (PCR$_T$) dans la composition à base de polypropylène étant la somme de la teneur en constituant A (PCR-PP) et du matériau recyclé sans le constituant C choisi parmi la résine de polyéthylène post-consommation (PCR-PE) et/ou la résine de polyoléfine post-consommation (PCR-PO).

**6.** Procédé selon l'une quelconque des revendications 1 à 5, **caractérisé en ce que** la composition à base de polypropylène :

- comprend une teneur totale en polyéthylène comprise entre 5 et 25 % en poids, par rapport au poids total de la composition à base de polypropylène, de préférence entre 5 et 15 % en poids ; et/ou
- comprend une teneur en insolubles dans l'acétone comprise entre 1,0 et 20 % en poids par rapport au poids total de la composition à base de polypropylène, de préférence entre 1,0 et 15 % en poids, et/ou
- a un MI2 compris entre 1,0 et 8,0 g/10 min tel que déterminé conformément aux conditions M de la norme ISO 1133, à une température de 230°C et sous une charge de 2,16 kg.

**7.** Procédé selon l'une quelconque des revendications 1 à 6, **caractérisé en ce que** le constituant C est une résine de polyéthylène ayant :

- une densité d'au moins 0,940 g/cm$^3$ telle que déterminée selon la norme ISO 1183 à 23°C, de préférence d'au moins 0,950 g/cm$^3$, et/ou
- un MI2 compris entre 0,2 et 2,5 g/10 min tel que déterminé conformément aux conditions D de la norme ISO 1133, à une température de 190°C et sous une charge de 2,16 kg, de préférence comprise entre 0,5 et 1,0 g/10 min.

**8.** Procédé selon l'une quelconque des revendications 1 à 7, **caractérisé en ce que** :

- la teneur en constituant B est comprise entre 10 et 60 % en poids par rapport au poids total de la composition à base de polypropylène ; et/ou
- la teneur en constituant C est comprise entre 5 et 25 % en poids par rapport au poids total de la composition à base de polypropylène ; et/ou
- la teneur en constituant D est comprise entre 0 et 10,0 % en poids par rapport au poids total de la composition à base de polypropylène ; et/ou
- la teneur en constituant E est comprise entre 0 et 20,0 % en poids par rapport au poids total de la composition à base de polypropylène.

**9.** Procédé selon l'une quelconque des revendications 1 à 8, **caractérisé en ce que** le procédé comprend en outre l'étape de fourniture d'un constituant D qui est un ou plusieurs élastomères, et **en ce que** l'étape de mélange à l'état fondu des constituants pour former une composition à base de polypropylène comprend le mélange à l'état fondu du constituant D avec les autres constituants pour former la composition à base de polypropylène, de préférence, le constituant D qui est un ou plusieurs élastomères :

- est choisi parmi les copolymères élastomères d'éthylène avec du 1-octène, les copolymères élastomères d'éthylène avec du 1-butène ; les copolymères élastomères d'éthylène avec du propène, et leur quelconque mélange ; et/ou parmi les SIS (copolymères séquencés styrène isoprène styrène), les SEPS (copolymères séquencés styrène isoprène styrène hydrogénés), les SBS (copolymères séquencés styrène butadiène styrène), les SEBS (copolymères styrène butadiène hydrogénés), les SBSS (copolymères séquencés styrène butadiène styrène styrène), et tout mélange de ceux-ci ; et/ou
- a un MI2 compris entre 0,5 et 5,0 g/10 min tel que déterminé conformément aux conditions D de la norme ISO 1133, à une température de 190°C et sous une charge de 2,16 kg.

**10.** Procédé selon la revendication 9, **caractérisé en ce que** la composition à base de polypropylène comprend entre 0,1 et 10 % en poids de constituant D par rapport au poids total de la composition à base de polypropylène, le constituant D étant un ou plusieurs élastomères.

**11.** Procédé selon l'une quelconque des revendications 1 à 10, **caractérisé en ce que** le procédé comprend en outre l'étape de fourniture d'un constituant E qui est une ou plusieurs charges et **en ce que** l'étape de mélange à l'état fondu des constituants pour former une composition à base de polypropylène consiste à mélanger à l'état fondu le constituant E avec les autres constituants pour former la composition à base de polypropylène, de préférence :

- la composition à base de polypropylène comprend entre 0,1 et 15 % en poids de constituant E par rapport au poids total de la composition à base de polypropylène ; et/ou
- le constituant E est une ou plusieurs charges minérales de talc.

**12.** Procédé selon l'une quelconque des revendications 9 à 11, **caractérisé en ce que** le procédé comprend en outre l'étape de fourniture d'un constituant D qui est un ou plusieurs élastomères, et l'étape de fourniture d'un constituant E qui est une ou plusieurs charges ; et **en ce que** l'étape de mélange à l'état fondu des constituants pour former une composition à base de polypropylène consiste à mélanger à l'état fondu le constituant D et le constituant E avec les autres constituants pour former la composition à base de polypropylène ; de préférence, la composition à base de polypropylène comprend entre 0,1 et 10 % en poids de constituant D par rapport au poids total de la composition à base de polypropylène, le constituant D étant un ou plusieurs élastomères et/ou la composition à base de polypropylène comprenant entre 0,1 et 15 % en poids de constituant E par rapport au poids total de la composition à base de polypropylène.

**13.** Composition à base de polypropylène produite par un procédé selon l'une quelconque des revendications 1 à 12.

**14.** Composition à base de polypropylène **caractérisée en ce qu'**elle comprend entre 35 et 80 % en poids d'un constituant A qui est une résine de polypropylène post-consommation (PCR-PP) par rapport au poids total de la composition à base de polypropylène, le constituant A étant une résine de polypropylène post-consommation ayant un MI2 compris entre 7 et 70 g/10 min tel que déterminé conformément aux conditions M de la norme ISO 1133, à une température de 230°C et sous une charge de 2,16 kg, le constituant A étant un mélange de polypropylène recyclé et de polyéthylène recyclé, la teneur en polyéthylène recyclé étant comprise entre 3 et 20 % en poids par rapport au poids total du constituant A ;

et **en ce que** la composition à base de polypropylène a :

- un MI2 compris entre 1,0 et 8,0 g/10 min tel que déterminé conformément aux conditions M de la norme ISO 1133, à une température de 230°C et sous une charge de 2,16 kg ;
- une teneur en insolubles dans l'acétone comprise entre 1,0 et 15 % en poids par rapport au poids total de la composition à base de polypropylène ; et
- une teneur totale en polyéthylène comprise entre 5 et 25 % en poids, par rapport au poids total de la composition à base de polypropylène, de préférence entre 5 et 15 % en poids ;

de préférence, la composition à base de polypropylène est produite par un procédé selon l'une quelconque des revendications 1 à 12.

15. Utilisation de la composition à base de polypropylène obtenue par le procédé selon l'une quelconque des revendications 1 à 12 pour fabriquer un article dans un procédé choisi parmi l'extrusion, le moulage par soufflage, l'injection, le moulage par injection-soufflage, le moulage par injection-étirage-soufflage, le rotomoulage, l'extrusion et thermoformage.

16. Article produit à partir de la composition à base de polypropylène obtenue par le procédé selon l'une quelconque des revendications 1 à 12, ou produit à partir d'un mélange comprenant la composition à base de polypropylène obtenue par le procédé selon l'une quelconque des revendications 1 à 12 ; de préférence, l'article est choisi parmi les tuyaux, les tubes ondulés, les tôles, les tôles ondulées, les boîtes, les seaux, les bouteilles, les jerrycans, les conteneurs, les bouchons et fermetures, les appareils électroménagers, les plateaux, les bagages, les pièces automobiles, les pare-chocs, les tableaux de bord, les boîtiers de batterie et les panneaux d'habillage intérieur.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015169690 A

**Non-patent literature cited in the description**

- *CHEMICAL ABSTRACTS,* 14807-96-6

- **G.J. RAY et al.** *Macromolecules,* 1977, vol. 10 (4), 773-778